# EUROPÄISCHE PATENTSCHRIFT

(11) **EP 3 504 436 B1**
(45) Veröffentlichungstag und Bekanntmachung des Hinweises auf die Patenterteilung: **18.03.2020**
(21) Anmeldenummer: 17758121.2
(22) Anmeldetag: 21.08.2017
(51) Int. Cl.: F04B 39/00

(54) **SAUGSCHALLDÄMPFER**
SUCTION MUFFLER
AMORTISSEUR DU BRUIT D'ASPIRATION

(30) Priorität: 23.08.2016 AT 5017216 U
(43) Veröffentlichungstag der Anmeldung: 03.07.2019
(73) Patentinhaber: Secop GmbH, 24939 Flensburg (DE)
(72) Erfinder: NIELSEN, Sven Eric, 24944 Flensburg (DE)
(74) Vertreter: KLIMENT & HENHAPEL
(86) Internationale Anmeldenummer: PCT/EP2017/071037
(87) Internationale Veröffentlichungsnummer: WO 2018/036968

(56) Entgegenhaltungen:
- EP-B1- 1 446 580
- WO-A1-2005/073558
- AT-U1- 9 716
- DE-A1- 10 317 458
- JP-A- S5 810 175

## Beschreibung

### GEBIET DER ERFINDUNG

Die vorliegende Erfindung betrifft einen Saugschalldämpfer für einen gekapselten Kältemittelverdichter, mit
- einem Einlass, um Kältemittel in den Saugschalldämpfer einströmen lassen zu können,
- einem Auslass, um Kältemittel aus dem Saugschalldämpfer in Richtung einer Kolben-Zylinder-Einheit des Kältemittelverdichters ausströmen lassen zu können,
- einer den Einlass und den Auslass miteinander verbindenden Dämpfungskammer zur Schalldämpfung und
- einer mit der Dämpfungskammer in Verbindung stehenden und mit der Umgebung kommunizierenden Ausgleichskammer zum Druckausgleich der Dämpfungskammer mit der Umgebung,
wobei der Saugschalldämpfer in einer Betriebsposition zur Aufnahme in einem, einen wannenartig ausgebildeten Bodenbereich zur Aufnahme eines Ölsumpfs aufweisenden, Verdichtergehäuse des Kältemittelverdichter vorgesehen ist, sowie einen Kältemittelverdichter mit einem Saugschalldämpfer.

### STAND DER TECHNIK

Gekapselte, insbesondere hermetisch gekapselte, Kältemittelverdichter sind seit langem bekannt und kommen vorwiegend in Kühlmöbeln, wie Kühlschränken oder -regalen, zum Einsatz. Der Kältemittelprozess als solches ist ebenfalls seit langem bekannt. Kältemittel wird dabei durch Energieaufnahme aus dem zu kühlenden Raum in einem Verdampfer erhitzt und schließlich überhitzt und mittels des Kältemittelverdichters mit einer Kolben-Zylinder-Einheit auf ein höheres Druckniveau gepumpt, wo es Wärme über einen Kondensator abgibt und über eine Drossel, in der eine Druckreduzierung und die Abkühlung des Kältemittels erfolgt, wieder zurück in den Verdampfer befördert wird.

Ein Ansaugen des (gasförmigen) Kältemittels erfolgt über eine direkt vom Verdampfer kommende Kältemittelzuleitung während eines Ansaugtaktes der Kolben-Zylinder-Einheit. Die Kältemittelzuleitung mündet bei bekannten hermetisch gekapselten Kältemittelverdichtern in der Regel in das hermetisch gekapselte Verdichtergehäuse ein - meistens in der Nähe eines Einlasses eines Saugschalldämpfers (im Englischen auch als Muffler bezeichnet), von wo das Kältemittel in den Saugschalldämpfer und durch diesen zu einem Ansaugventil der Kolben-Zylinder-Einheit strömt. Der Saugschalldämpfer dient in erster Linie dazu, das Geräuschniveau des Kältemittelverdichters beim Ansaugvorgang so gering wie möglich zu halten. Bekannte Saugschalldämpfer bestehen in der Regel aus einer Dämpfungskammer, die, beispielsweise durch Zwischenwände oder Trennwände, in mehrere miteinander in Verbindung stehende Dämpfungsvolumina unterteilt sein kann. Diese Dämpfungsvolumina dämpfen den Schall basierend auf dem bekannten Helmholtz-Prinzip, d.h. die Dämpfungsvolumina in der Dämpfungskammer fungieren als Resonatoren, die Schall absorbieren. Darüber hinaus weisen bekannte Saugschalldämpfer neben dem Einlass, über welchen das Kältemittel in das Innere des Saugschalldämpfers strömt, einen Auslass auf, welcher dicht am Ansaugventil der Kolben-Zylinder-Einheit anliegt und über welchen Kältemittel im Ansaugtakt in den Zylinder gesaugt wird.

Wenn der Auslass der Kältemittelzuleitung nicht unmittelbar in den Einlass bzw. eine Einlassöffnung des Saugschalldämpfers mündet, kann es auf folgende Art und Weise zu einer Erwärmung sowie zu einer ungewünschten Vermischung des vom Saugrohr kommenden kalten Kältemittels mit bereits im Verdichtergehäuse befindlichen und durch die Abwärme der Kolben-Zylinder-Einheit erwärmten Kältemittel kommen. Einerseits ist das Ansaugventil der Kolben-Zylinder-Einheit pro Zyklus lediglich im Ansaugtakt über einen Kurbelwinkelbereich von ca. 180° offen, und daher kann lediglich innerhalb dieses Zeitfensters Kältemittel in den Zylinder der Kolben-Zylinder-Einheit des Kältemittelverdichters gesaugt werden. Andererseits strömt das kalte Kältemittel aus der Kältemittelzuleitung auch bei geschlossenem Ansaugventil - in das Verdichtergehäuse - nach. In der Folge kommt es zu einer Erwärmung des in das Verdichtergehäuse eintretenden Kältemittels, da das Kältemittel im Verdichtergehäuse die durch die Betriebsabwärme erhitzte Kolben-Zylinder-Einheit sowie deren Bauteile kühlt, und es kommt zu einer Vermischung mit bereits im Verdichtergehäuse befindlichem wärmerem Kältemittel.

Um die Erwärmung des aus der Kältemittelzuleitung nachströmenden Kältemittels zu vermeiden und zusätzlich das Geräuschniveau des Kältemittelverdichters weiter zu senken, ist es aus dem Stand der Technik bekannt, die Kältemittelzuleitung möglichst direkt mit der Einlassöffnung des Saugschalldämpfers zu verbinden, sodass das aus dem Verdampfer kommende Kältemittel nahezu gänzlich direkt in den Saugschalldämpfer geführt wird und nur ein vernachlässigbar geringer Anteil des Kältemittels aus der Kältemittelzuleitung in das Innere des Verdichtergehäuses gelangt und sich dort erwärmt. In einem optimal ausgelegten Kompressor wird das gesamte eintretende Kältemittel direkt in den Saugschalldämpfer weitergeleitet, jedoch ist dieser Zustand durch geringe Undichtigkeiten in der Praxis nur sehr schwer zu erreichen.

Aufgrund des unten erläuterten Umstands, dass das kalte Kältemittel auch bei geschlossenem Ansaugventil in den Saugschalldämpfer - nunmehr über die direkte Verbindung - strömt, ist es jedoch erforderlich, im Saugschalldämpfer eine mit der Dämpfungskammer und der Umgebung in Verbindung stehende Ausgleichskammer vorzusehen, um einen Druckausgleich zwischen Saugschalldämpfer und der Umgebung, also in der Betriebsposition einen Druckausgleich mit dem Inneren des Verdichtergehäuses, zu ermöglichen. Beispielsweise offenbart die EP 1446 580 B1 einen Saugschalldämpfer für einen derartigen Direct-Suction Kompressor, welcher Saugschalldämpfer eine Ausgleichskammer aufweist, die über eine fluidische Verbindung mit einer akustischen Kammer in Verbindung steht.

Während des Ansaugtakts wird vom Kolben mehr Kältemittel eingesaugt als über die Kältemittelzuleitung im gleichen Zeitraum in den Saugschalldämpfer nachströmen kann. Die Differenz an Kältemittel wird einerseits durch das in der Dämpfungskammer befindliche Kältemittel und andererseits über das in der Ausgleichkammer befindliche Kältemittel ausgeglichen. Würde die Ausgleichkammer nicht mit dem Inneren des Verdichtergehäuses kommunizieren, sodass gasförmiges Kältemittel aus dem Verdichtergehäuse in die Ausgleichskammer bzw. über die Ausgleichskammer in die Dämpfungskammer nachströmen kann, so würde es beim Ansaugen zu einem starken Druckabfall in der Dämpfungskammer kommen, wodurch weniger Kältemittel in den Zylinder der Kolben-Zylinder-Einheit eingesaugt werden würde. Aufgrund des Druckausgleichs mit der Umgebung kann der Druckabfall im Saugschalldämpfer erheblich reduziert werden und der Wirkungsgrad des Kältemittelverdichters verbessert werden.

Während des anschließenden Verdichtungstakts der Kolben-Zylinder-Einheit strömt Kältemittel aus der Kältemittelzuleitung in den Saugschalldämpfer nach, was einerseits aus der Druckdifferenz zwischen Saugschalldämpfer und Kältemittelzuleitung und andererseits - zu einem geringen Teil - aus der kinetischen Energie des Kältemittels resultiert. Das nachströmende Kältemittel strömt über die Dämpfungskammer und die Ausgleichskammer in das Innere des Kältemittelverdichters.

Aufgrund der zuvor beschriebenen Strömungseigenschaften des Kältemittels, kommt es während des Betriebs des Kältemittelkompressors zu einer laufenden Oszillation der in der Ausgleichskammer befindlichen Gassäule, die einen, je nach Kurbelwinkel variierenden, Anteil an kaltem Kältemittel aus der Kältemittelzuleitung und warmem Kältemittel aus dem Inneren des Verdichtergehäuses aufweist.

Gelangt beispielsweise flüssiges Kältemittel über die Kältemittelzuleitung in den Saugschalldämpfer, so verdampft es in der Regel aufgrund des, etwa bedingt durch die Abwärme der elektrischen Antriebseinheit und der Kolben-Zyliner-Einheit, höheren Temperaturniveaus im Saugschalldämpfer zum Verdampfen des flüssigen Kältemittels. Aufgrund der Volumenszunahme durch das Verdampfen würde sich ein Überdruck im Saugschalldämpfer ausbilden, wenn der Druckausgleich durch die Ausgleichskammer nicht gegeben wäre, der zur Beschädigung des Saugschalldämpfers, im Extremfall sogar zur Zerstörung des Saugschalldämpfers, und/oder zur Beschädigung der Verbindung zwischen Kältemittelzuleitung und Einlass führen kann.

Um die Kolben-Zylinder-Einheit während des Betriebs zu schmieren und so die Funktionstüchtigkeit zu gewährleisten, ist eine definierte Menge an Schmiermittel, etwa Schmieröl, vorgesehen, welche sich in Form eines Ölsumpfs in einem wannenartig ausgebildeten Bodenbereich des Kältemittelverdichters absetzt. Dieser Bodenbereich kann im Betriebszustand des Kühlmittelkompressors auch als Aufstandsfläche für die Kolben-Zylinder-Einheit, insbesondere für die den Kolben antreibende elektrische Antriebseinheit, dienen. Die Kolben-Zylinder-Einheit kann aber auch über am Verdichtergehäuse befestigte Konsolen abgestützt sein, sodass der Bodenbereich nicht als Aufstandsfläche dient.

Wie bereits zuvor beschrieben, befindet sich in der Regel gasförmiges Kältemittel im Inneren des Verdichtergehäuses, welches in der Regel in Ruhephasen des Kältemittelverdichters aus der Kältemittelzuleitung über den Saugschalldämpfer in das Verdichtergehäuse nachströmt bzw. beim Befüllen des Kältemittelverdichters mit Kältemittel in das Verdichtergehäuse eingeführt wird. Dieses gasförmige Kältemittel vermischt sich während des Betriebs mit tropfenförmigem Schmiermittel, sodass ein Kältemittel-Schmiermittel-Nebel entsteht. Da es in der Ausgleichskammer zu einer, wenn auch geringen, Vermischung von Kältemittel aus der Kältemittelzuleitung und dem auch Schmiermittel Tropfen enthaltenden Kältemittel kommen kann, kann im Ansaugtakt Schmiermittel in die Dämpfungskammer gelangen, welches sich zu einem großen Teil an den Innenwänden oder Trennwänden der Dämpfungskammer absetzt und nach unten abrinnt. Schmiermittel kann auch über Undichtigkeiten in der Kolben-Zylinder-Einheit in den Kühlmittelkreislauf gelangen, wodurch es letztendlich in den Saugschalldämpfer gelangt. Um den Abfluss des in der Dämpfungskammer angesammelten Schmiermittels bzw. auch von flüssigem Kältemittel zu ermöglichen, weist der Boden des Saugschalldämpfers in der Regel zumindest eine Ölablassöffnung auf. Diese Ölablassöffnung hat einen relativ kleinen Durchmesser und ist in der Regel nur eine Bohrung mit einer Abtropfnase, die an der Außenseite des Saugschalldämpfers angeordnet ist. Bei der zumindest einen Ölablassöffnung, die bereits seit Jahrzehnten zum Stand der Technik gehört, handelt es sich jedoch nicht um eine Ausgleichskammer gemäß dem Oberbegriff des Hauptanspruchs, da die Ölablassöffnung einerseits im Betrieb durch einen Ölfilm verschlossen ist und andererseits der Durchmesser der Ölablassöffnung viel zu klein ist, um den notwendigen Druckausgleich zu gewährleisten. Dies kann alleine dadurch erklärt werden, dass die Drehzahl von gattungsgemäßen Kältemittelverdichtern unter Volllast in der Regel im Bereich zwischen 3.000 und 3.600 Umdrehungen pro Minute liegt, sodass trotz bis zu 120 Taktwechsel zwischen Ansaugtakt und Verdichtungstakt pro Sekunde der Druckausgleich gewährleistet sein muss, was nur bei entsprechenden Durchflussquerschnitten erreicht werden kann.

Um eine Ansammlung von Schmiermittel, welches durch das Ansaugen des Kältemittel-Schmiermittel-Nebels in die Ausgleichskammer gelangen kann, in der Ausgleichskammer zu verhindern, ist die Öffnung der Ausgleichskammer zumeist an einer Unterseite des Saugschalldämpfers im Nahbereich des Ölsumpfs ausgebildet, um Schmiermittel aus der Ausgleichskammer in den Ölsumpf abfließen lassen zu können.

Ein Nachteil des Stands der Technik äußert sich jedoch darin, dass eine Verstopfung der Öffnung der Ausgleichskammer dazu führt, dass kein Druckausgleich zwischen der Dämpfungskammer und der Umgebung, also dem Inneren des Saugschalldämpfers, mehr stattfindet. Dadurch kommt es zu einem erheblichen Leistungsabfall des Kältemittelverdichters, da der Druckabfall im Saugschalldämpfer nicht ausgeglichen werden kann. Somit gelangt während des Ansaugtakts wesentlich weniger (gasförmiges) Kältemittel in die Kolben-Zylinder-Einheit, sodass auch im Verdichtungstakt weniger Kältemittel verdichtet wird.

Insbesondere kann es zum Verstopfen der Öffnung kommen, wenn der Kältemittelkompressor nach einer Ruhephase, in der sich ein Großteil des Schmiermittels im Ölsumpf sammelt und der Pegel des Ölsumpfs sein Maximum erreicht, wieder in Betrieb genommen wird. In der Ruhephase kann es durch die Abkühlung des Kältemittelverdichters dazu kommen, dass gasförmiges Kältemittel im Innenraum des Verdichtergehäuses kondensiert bzw. flüssiges Kältemittel nicht sofort verdampft. Dadurch bildet sich im Ölsumpf ein Gemisch aus Schmiermittel und flüssigem Kältemittel aus, welches den Pegel des Ölsumpfs ansteigen lässt. Steigt dieser Pegel bis zur Öffnung der Ausgleichskammer, so wird, neben dem Verhindern des Druckausgleichs, im Ansaugtakt auch flüssiges Schmiermittel-Kältemittel-Gemisch über die Ausgleichskammer und die Dämpfungskammer in die Kolben-Zylinder-Einheit gesaugt. Durch das flüssige Gemisch besteht insbesondere die Gefahr, dass die Ventilfedern, hauptsächlich des Ansaugventils, beschädigt werden.

Selbst wenn der Maximalpegel des flüssigen Schmiermittel-Kältemittel-Gemischs unterhalb der Öffnung der Ausgleichskammer liegt, kann es beim Einschalten des Kältemittelkompressors trotzdem zu einer zumindest teilweisen Verstopfung der Öffnung der Ausgleichskammer kommen. Beim Einschalten des Kältemittelverdichters bildet sich durch die Bewegung des Kolbens ein Unterdruck im Inneren des Verdichtergehäuses aus, der dazu führt, dass das flüssige Schmiermittel-Kältemittel-Gemisch zu kochen beginnt und das gelöste flüssige Kältemittel verdampft. Dabei schäumt das flüssige Schmiermittel-Kältemittel-Gemisch auf, sodass der entstehende Schaum die Öffnung der Ausgleichskammer verschließt, den Druckausgleich verhindert und zusätzlich Schmiermittel-Kältemittel-Schaum in den Saugschalldämpfer bzw. in die Kolben-Zylinder-Einheit gesaugt wird. Obwohl dieser Betriebszustand nicht lange andauert, treten erhebliche Leistungseinbußen auf und es besteht die Gefahr der Beschädigung der Ventilfedern.

In beiden beschriebenen Fällen wird der Druckausgleich zwischen dem Saugschalldämpfer und dem Inneren des Verdichtergehäuses unterbunden, sodass der Druckabfall im Saugschalldämpfer nicht ausgeglichen werden kann und weniger Kältemittel in die Kolben-Zylinder-Einheit gelangt. Gelangt während der Behinderung des Druckausgleichs flüssiges Kältemittel über die Kältemittelzulaufleitung in den Saugschalldämpfer und verdampft dort, kann es zu einem Druckanstieg im Saugschalldämpfer kommen, was mit den zuvor beschriebenen Gefahren verbunden ist.

### AUFGABE DER ERFINDUNG

Es ist daher eine Aufgabe der Erfindung die Nachteile des Stands der Technik zu überwinden und einen Saugschalldämpfer für einen gekapselten Kältemittelverdichter vorzuschlagen, der einen kontinuierlichen Druckausgleich zwischen der Dämpfungskammer und der Umgebung auch im Falle einer Verstopfung der Öffnung der Ausgleichskammer, insbesondere beim Anfahren des Kältemittelkompressors, gewährleistet.

### DARSTELLUNG DER ERFINDUNG

Diese Aufgabe wird in einem erfindungsgemäßen Saugschalldämpfer für einen gekapselten Kältemittelverdichter, mit einem Einlass, um Kältemittel in den Saugschalldämpfer einströmen lassen zu können, einem Auslass, um Kältemittel aus dem Saugschalldämpfer in Richtung einer Kolben-Zylinder-Einheit des Kältemittelverdichters ausströmen lassen zu können, einer den Einlass und den Auslass miteinander verbindenden Dämpfungskammer zur Schalldämpfung und einer mit der Dämpfungskammer in Verbindung stehenden und mit der Umgebung kommunizierenden Ausgleichskammer zum Druckausgleich der Dämpfungskammer mit der Umgebung, wobei der Saugschalldämpfer in einer Betriebsposition zur Aufnahme in einem, einen wannenartig ausgebildeten Bodenbereich zur Aufnahme eines Ölsumpfs aufweisenden, Verdichtergehäuse des Kältemittelverdichters vorgesehen ist, dadurch gelöst, dass die Ausgleichskammer als erste Ausgleichskammer mit einer ersten Öffnung zum Druckausgleich ausgebildet ist und der Saugschalldämpfer eine weitere, zweite Ausgleichskammer mit einer zweiten Öffnung zum Druckausgleich aufweist..

Dadurch, dass zwei separat voneinander ausgebildete Ausgleichskammern vorgesehen sind, die jeweils beide über eine Öffnung, unabhängig von der Öffnung der anderen Ausgleichskammer, mit der Umgebung bzw. in der Betriebsposition mit dem Inneren des Verdichtergehäuses kommunizieren, ist ein ständiger Druckausgleich zwischen der Dämpfungskammer und der Umgebung möglich. Die Ausgleichskammern können dabei separat voneinander ausgebildet sein, wobei es denkbar ist, dass die beiden Ausgleichskammern nicht direkt miteinander verbunden sind, sondern nur indirekt über die jeweilige Verbindung zur Dämpfungskammer. Die Ausgleichskammern können beispielsweise unterschiedlich groß ausgebildet sein und unterschiedliche Volumina aufweisen, wobei es auch denkbar ist, Ausgleichskammern mit ähnlichen oder gleichgroßen Volumina vorzusehen. Üblicher Weise sind die Ausgleichskammern nur über die ihnen zugeordneten Öffnungen mit der Umgebung verbunden, sodass in der Betriebsposition Kältemittel aus dem Inneren des Verdichtergehäuses nur über die erste Öffnung direkt in die erste Ausgleichskammer und nur über die zweite Öffnung direkt in die zweite Ausgleichskammer gelangen kann. Um ein gleichzeitiges Verstopfen beider Öffnungen zu verhindern, kann vorgesehen sein, dass die zweite Öffnung, vorzugsweise in einer Höhenrichtung des Kältemittelverdichters, oberhalb der ersten Öffnung angeordnet ist. In anderen Worten sind die erste Öffnung und die zweite Öffnung in Höhenrichtung des Kältemittelverdichters, die in der Regel der Höhenrichtung des Saugschalldämpfers entspricht, voneinander beabstandet.

In eine Ausführungsvariante der Erfindung ist vorgesehen, dass der Saugschalldämpfer zumindest einen Befestigungsabschnitt zur Anbindung an die Kolben-Zylinder-Einheit aufweist und dass der zumindest eine Befestigungsabschnitt derart ausgebildet ist, um eine Befestigung des Saugschalldämpfers an der Kolben-Zylinder-Einheit zu ermöglichen, in welcher die zweite Öffnung bezogen auf den Bodenbereich des Verdichtergehäuses oberhalb der ersten Öffnung angeordnet ist. Durch den Befestigungsabschnitt, der vorzugsweise im Bereich des Auslasses oder durch den Auslass selbst ausgebildet ist, ist der Saugschalldämpfer in der Betriebsposition an der Kolbe-Zylinder-Einheit, insbesondere am Zylinderkopf, genauer am Zylinderkopfdeckel, befestigt und so im Verdichtergehäuse fix angeordnet. Durch die entsprechende Auslegung des Befestigungsabschnitts lässt sich die wie folgt beschriebene Position des Saugschalldämpfers relativ zu den anderen Bauteilen des Kältemittelverdichters in einfacher Art und Weise einstellen.

Die erste Öffnung der ersten Ausgleichskammer ist in der Regel an der Unterseite des Saugschalldämpfers ausgebildet, sodass Schmiermittel oder flüssiges Kältemittel aus der Ausgleichskammer abtropfen bzw. abfließen kann. Grundsätzlich ist die erste Öffnung oberhalb des im Bodenbereich des Verdichtergehäuses ausgebildeten Ölsumpfs angeordnet, wobei es in den eingangs beschriebenen Betriebszuständen noch immer zu einer Verstopfung der ersten Öffnung kommen kann.

Da die beiden Öffnungen aber in verschiedenen Höhen des Saugschalldämpfers, relativ zueinander und damit in der Betriebsposition auch relativ zum Bodenbereich des Verdichtergehäuses, angeordnet sind, ist gewährleistet, dass, selbst wenn die erste, in der Betriebsposition näher am Bodenbereich angeordnete, Öffnung, etwa mit flüssigem Schmiermittel-Kältemittel-Gemisch oder Schmiermittel-Kältemittel-Schaum aus dem Ölsumpf, verschlossen ist, der Druckausgleich mit der Umgebung durch die zweite, in der Betriebsposition weiter vom Bodenbereich des Verdichtergehäuses beabstandete, Öffnung gewährleistet ist. Der Druckausgleich ist jedenfalls durch die zweite Öffnung gewährleistet, da durch die zweite Öffnung auch bei Verstopfung der ersten Öffnung Kältemittel aus dem Inneren des Verdichtergehäuses in die zweite Ausgleichsammer gesaugt werden kann, sodass zumindest über die zweite Ausgleichskammer Kältemittel in Richtung der Dämpfungskammer strömen kann. Die Ausgleichskammern sind also derart angeordnet, dass der Abstand zwischen der zweiten Öffnung der zweiten Ausgleichskammer und dem Bodenbereich des Verdichtergehäuses größer ist als der Abstand zwischen dem Bodenbereich des Verdichtergehäuses und der ersten Öffnung der ersten Ausgleichskammer. In anderen Worten ist die erste Öffnung als untere Öffnung und die zweite Öffnung als obere Öffnung ausgebildet. Der Abstand kann dabei als der Normalabstand zwischen einer zu einer Aufstandsfläche des Kältemittelkompressors parallelen Ebene, die durch den tiefsten Punkt des Bodenbereichs verläuft, und den Mittelpunkten der Öffnungen bestimmt werden.

Eine Ausführungsvariante der Erfindung sieht vor, dass ein flexibles Verbindungselement am Einlass befestigt ist, um eine am Einlass angeordnete Einlassöffnung des Saugschalldämpfers in der Betriebsposition mit einer in das Verdichtergehäuse einmündenden Kältemittelzuleitung zu verbinden, um Kältemittel aus der Kältemittelzuleitung direkt in den Saugschalldämpfer strömen zu lassen. Das flexible Verbindungselement, dass beispielsweise eine Kunststoffhülse und ein stabilisierendes Metallelement umfassen kann, ist in der Regel rohrförmig, insbesondere auch teleskopartig, ausgebildet und ermöglicht es, das Kältemittel direkt von der Kältemittelzuleitung über den Saugschalldämpfer zum Ansaugventil strömen zu lassen und gleichzeitig die Ausbreitung von Schall, insbesondere von Geräuschen aus dem Saugschalldämpfer, in das Innere des Verdichtergehäuses zu verringern. Vorzugsweise geschieht dies, ohne dass sich das Kältemittel im Verdichtergehäuse verteilt bzw. mit im Inneren des Verdichtergehäuses befindlichem Kältemittel vermischt. Es versteht sich von selbst, das aufgrund der in der Praxis fast unmöglichen kompletten Abdichtung des flexiblen Verbindungselements immer noch ein, jedoch vernachlässigbar kleiner, Anteil des Kältemittel in das Innere des Verdichtergehäuses übertreten kann. Ein Eintreten von erwärmtem Kältemittel in das flexible Verbindungselement ist jedoch so gut wie ausgeschlossen, sodass der Wirkungsgrad des Kältemittelverdichters quasi nicht beeinflusst wird. Aufgrund der flexiblen Ausbildung des Verbindungselements bestünde nach dem Stand der Technik die Gefahr, dass bei einem nicht stattfindenden Druckausgleich aufgrund eines Verschlusses der Öffnung der Ausgleichskammer, das flexible Verbindungselement durch die durch den Hub des Kolbens verursachten Druckstöße oder einen sich im Saugschalldämpfer ausbildenden Überdruck beschädigt oder sogar zerstört werden könnte. Durch den erfindungsgemäß ausgestalteten Saugschalldämpfer kann eine Zerstörung oder Beschädigung des flexiblen Verbindungselements effektiv verhindert werden. Durch die beiden Öffnungen, insbesondere durch die erste Öffnung, kann auch flüssiges Kältemittel aus dem Saugschalldämpfer abfließen, wenn der Kältemittelverdichter vor dem ersten Betrieb über die Kältemittelzuleitung mit Kältemittel versorgt wird. Üblicherweise erfolgt die Befüllung jedoch über ein dafür vorgesehenes Prozessrohr.

Besonders vorteilhaft ist es, den Saugschalldämpfer mit einem geteilten, zumindest zwei Gehäuseteilen umfassenden, Gehäuse auszuführen, um beispielsweise die Fertigung mittels eines Spritzgussverfahrens zu ermöglichen. Die Gehäuseteile sind jedoch, zumindest in der Betriebsposition, dicht miteinander verbunden, sodass Kältemittel aus dem Saugschalldämpfer nur über den Einlass bzw. die Öffnungen der Ausgleichskammern in den Saugschalldämpfer eintreten und nur über den Auslass bzw. über die Öffnungen der Ausgleichskammern entweichen kann.

In einer ersten Ausführungsvariante umfasst das Gehäuse ein erstes und ein zweites Gehäuseteil. Das erste Gehäuseteil ist dabei in der Regel als Unterteil des Saugschalldämpfers ausgebildet, also in der Betriebsposition zumindest abschnittsweise, nämlich im Bereich seiner Unterseite, dem Bodenbereich des Verdichtergehäuses zugewandt. Das zweite Gehäuseteil bildet hingegen das Oberteil oder den Deckel des Saugschalldämpfers aus, wobei der Einlass oder der Auslass bzw. der Einlass und der Auslass vom zweiten Gehäuseteil ausgebildet sind. Der zweite Gehäuseteil ist daher in der Betriebsposition weiter vom Bodenbereich beabstandet als das erste Gehäuseteil. Der die Dämpfungskammer bildende Hauptteil des Gehäuses kann sowohl vom ersten als auch vom zweiten Gehäuseteil ausgebildet werden, vorzugsweise aber vom ersten Gehäuseteil. Daher ist gemäß einer weiteren Ausführungsvariante vorgesehen, dass der Saugschalldämpfer zumindest ein erstes Gehäuseteil und ein zweites Gehäuseteil umfasst, wobei der Einlass und/oder der Auslass vom zweiten Gehäuseteil ausgebildet sind.

Gemäß einer weiteren Ausführungsvariante der Erfindung ist vorgesehen, dass die erste Ausgleichskammer mit der ersten Öffnung im ersten Gehäuseteil ausgebildet ist. Dadurch kann die erste Ausgleichskammer samt erster Öffnung in einfacher Art und Weise bei der Herstellung des ersten Gehäuseteils, etwa mittels Spritzguss, ausgeformt werden. Gleichzeitig ist somit die erste Öffnung in der Betriebsposition jedenfalls in der Nähe des Bodenbereichs des Verdichtergehäuses positioniert, insbesondere wenn die erste Öffnung an der Unterseite des ersten Gehäuseteils ausgebildet ist.

In einer zweiten Ausführungsvariante umfasst das Gehäuse drei Gehäuseteile: den ersten Gehäuseteil, der wiederum als Unterteil des Saugschalldämpfers ausgebildet ist, den zweiten Gehäuseteil, der ebenfalls wieder den Oberteil des Gehäuses bildet, und einen zwischen erstem und zweitem Gehäuseteil angeordneten dritten Gehäuseteil, der als Mitteteil fungiert und damit den Großteil der Mantelfläche des Saugschalldämpfers ausbildet. Daher ist vorgesehen, dass der Saugschalldämpfer ein erstes Gehäuseteil, ein zweites Gehäuseteil und ein drittes Gehäuseteil umfasst, wobei das dritte Gehäuseteil zwischen dem ersten Gehäuseteil und dem zweiten Gehäuseteil angeordnet ist. Dadurch wird die Fertigung des Saugschalldämpfers weiter vereinfacht, da die komplexe Geometrie der Dämpfungskammer durch die Herstellung des Mittelteils, beispielsweise mittels eines Spritzgussverfahrens, ausgebildet werden kann, während Einlass und Auslass gesondert vom ersten und/oder zweiten Gehäuseteil ausgebildet sind. Wie in der Folge gezeigt, vereinfacht sich auch die Ausbildung der beiden Ausgleichskammern erheblich. Vorteilhaft ist es, wenn das erste Gehäuseteil, also das Unterteil, die erste Öffnung aufweist.

So können durch die Dreiteilung des Gehäuses ein erster Teilabschnitt der ersten Ausgleichkammer durch den ersten Gehäuseteil und ein zweiter Teilabschnitt des Gehäuses durch den angrenzenden dritten Gehäuseteil ausgebildet sein, wodurch in einfacher Art und Weise unterschiedliche Querschnitte in den Teilabschnitten herstellbar sind. Daher ist in einer weiteren Variante der zweiten Ausführungsvariante vorgesehen, dass die erste Ausgleichskammer einen vom ersten Gehäuseteil begrenzten ersten Teilabschnitt und einen vom dritten Gehäuseteil begrenzten zweiten Teilabschnitt aufweist, wobei die erste Öffnung im ersten Teilabschnitt ausgebildet ist.

Eine vorteilhafte Variante der zweiten Ausführungsvariante sieht vor, dass der erste Teilabschnitt als ein gegenüber dem zweiten Teilabschnitt verengter, rohrförmiger Fortsatz des ersten Gehäuseteils ausgebildet ist. Durch den rohrförmigen Fortsatz lässt sich in einfache Art und Weise die Querschnittsfläche der ersten Öffnung gegenüber der Querschnittsfläche des volumsgrößeren zweiten Teilabschnitts verringern. Wäre die Querschnittsfläche der ersten Öffnung nämlich zu groß, könnten Sauggeräusche der Kolben-Zylinder-Einheit vom Saugschalldämpfer in das Innere des Verdichtergehäuses übertreten, was das Geräuschniveau des Kältemittelverdichters unerwünscht erhöhen würde. Eine signifikante Querschnittsverengung ist jedoch insbesondere bei einteiligen, mittels Spritzgussverfahren hergestellten Gehäuseteilen äußert schwierig zu bewerkstelligen. Sind die beiden unterschiedlichen Querschnitte jedoch auf zwei separat voneinander herstellbare, von verschieden Gehäuseteilen ausgebildete, Teilabschnitte aufgeteilt, so können beide Teilabschnitte einfach herstellbare, unterschiedliche Querschnittsflächen aufweisen, sodass nach dem Zusammensetzten der Gehäuseteile ein Absatz bzw. eine Querschnittsverengung ausgebildet ist.

Besonders bevorzugte Verhältnisse stellen sich beim Betrieb des Kältemittelverdichters ein, wenn die Querschnittsfläche der ersten Öffnung zwischen 5% und 50%, vorzugsweise zwischen 10% und 30%, insbesondere zwischen 15% und 20%, einer mittleren Querschnittsfläche der ersten Ausgleichskammer beträgt. Als Bezugsgröße wird dabei die mittlere Querschnittsfläche der ersten Ausgleichskammer, die in der Regel das größere Volumen der beiden Ausgleichskammern aufweist, herangezogen. Diese mittlere Querschnittsfläche lässt sich in einfacher Art und Weise dadurch bestimmen, dass das Volumen der ersten Ausgleichskammer bestimmt wird (etwa über einen Versuch oder über mathematische Methoden), die Höhe der ersten Ausgleichskammer ermittelt wird und das bestimmte Volumen mit dem Volumen eines Zylinders mit kreisförmiger Grundfläche gleichgesetzt wird, wobei der Zylinder dieselbe Höhe aufweist wie die Ausgleichskammer. Dividiert man nun das bestimmte Volumen der ersten Ausgleichskammer durch die Höhe ergibt sich daraus unmittelbar die mittlere Querschnittsfläche der ersten Ausgleichskammer.

Gemäß einer bevorzugten Ausführungsvariante des erfindungsgemäßen Saugschalldämpfers, welcher zwei, drei oder mehr Gehäuseteile umfassen kann, ist die zweite Ausgleichskammer zumindest abschnittsweise im zweiten Gehäuseteil ausgebildet, wobei die zweite Öffnung im zweiten Gehäuseteil ausgebildet ist. Da das zweite Gehäuseteil in der Betriebsposition dem Bodenbereich zumindest abschnittsweise, nämlich im Bereich seiner Oberseite, abgewandt ist und als Oberteil oder Deckel des Saugschalldämpfers fungiert, ist durch die Ausbildung der zweiten Öffnung im zweiten Gehäuseteil in einfacher Art und Weise sicher gestellt, dass die zweite Öffnung oberhalb der ersten Öffnung angeordnet ist. Vorzugsweise ist die zweite Öffnung dabei an der Oberseite des zweiten Gehäuseteils angeordnet, um den größtmöglichen Abstand zur ersten Öffnung herzustellen. Insbesondere wenn die beiden Ausgleichskammern nicht direkt miteinander kommunizieren, kann es für die Fertigung vorteilhaft sein, wenn die zweite Ausgleichskammer ausschließlich im zweiten Gehäuseteil ausgebildet ist. Sind die beiden Ausgleichskammern jedoch direkt miteinander verbunden, kann es vorteilhaft sein, wenn ein Teil der zweiten Ausgleichskammer im zweiten Gehäuseteil ausgebildet ist und der andere Teil in angrenzenden ersten (im Fall von nur zwei Gehäuseteilen) oder dritten (im Fall von drei Gehäuseteilen) Gehäuseteil ausgebildet ist.

Zur Verbesserung der Strömungsverhältnisse in den Ausgleichskammern bzw. um eine gleichmäßige Oszillation der Gassäulen in den Ausgleichskammern zu erreichen, ist in einer weiteren bevorzugten Ausführungsvariante vorgesehen, dass die zweite Ausgleichskammer in die erste Ausgleichskammer einmündet. Beim Einmünden können die Längsachsen der Ausgleichskammern entweder schräg zueinander stehen, parallel oder fluchtend angeordnet sein oder einen rechten Winkel miteinander einschließen, wobei die in der Regel kleinere zweite Ausgleichskammer in die größere erste Ausgleichskammer einmündet. Dadurch ist gewährleistet, dass die Ausgleichskammern direkt miteinander verbunden sind und Kältemittel unmittelbar von der einen in die andere Ausgleichskammer übertreten kann. Somit wird auch ein Druckausgleich zwischen den beiden Ausgleichskammern ermöglicht, sodass bei einem Verschluss der ersten Öffnung Kältemittel aus dem Inneren des Verdichtergehäuses über die zweite Öffnung und die zweite Ausgleichskammer direkt in die erste Ausgleichskammer strömen kann. Vorzugsweise mündet die zweite Ausgleichskammer im der ersten Öffnung gegenüberliegenden Endbereich der ersten Ausgleichskammer, insbesondere in einem oberen Begrenzungsabschnitt der ersten Ausgleichskammer, in die erste Ausgleichskammer ein.

Während des Betriebs des Kältemittelkompressors ist ein Teil des Schmiermittels bzw. des Schmieröls in Tropfen-Form im Inneren des Verdichtergehäuses gemischt mit gasförmigem Kältemittel in Form eines Nebels vorhanden, wobei auch Schmiermittel direkt von der Kolben-Zylinder-Einheit abtropfen kann. Dieses Schmiermittel sammelt sich in der Regel aufgrund der Schwerkraftwirkung im Ölsumpf im Bodenbereich des Verdichtergehäuses. Während dieses Schmiermittel-Kreislaufs kann sich jedoch auch Schmiermittel an der Oberseite des zweiten Gehäuseteils ansammeln, sodass die Gefahr besteht, dass Schmiermittel über die zweite Öffnung in die zweite Ausgleichskammer bzw. sogar in die Dämpfungskammer eingesaugt wird. Dasselbe gilt auch für Schmiermittel-Tropfen die gemeinsam mit dem Kältemittel aus dem Inneren des Verdichtergehäuses angesaugt werden. Auch um zu verhindern, dass Schmiermittel in größeren Mengen über die zweite Öffnung in die Dämpfungskammer eingesaugt wird bzw. dass sich Schmiermittel in der zweiten Ausgleichskammer ansammelt, ist es besonders vorteilhaft wenn die zweite Ausgleichskammer in die erste Ausgleichskammer einmündet. Aufgrund des Höhenunterschieds zwischen den beiden Öffnungen kann durch die zweite Öffnung eintretendes Schmiermittel aufgrund der Schwerkraftwirkung durch die erste Öffnung abfließen kann. Vorteilhaft ist es dabei, wenn die Ausgleichskammern derart ausgebildet sind, dass ein kontinuierliches Gefälle zwischen zweiter und erster Öffnung das Abfließen ermöglicht.

Eine weitere Verbesserung der Strömungsverhältnisse wird in einer besonders bevorzugten Ausführungsvariante der Erfindung dadurch erzielt, dass die erste Ausgleichskammer eine erste Längsachse aufweist und rohrförmig ausgebildet ist und/oder dass die zweite Ausgleichskammer eine zweite Längsachse aufweist und rohrförmig, vorzugsweise mit einem kreisrunden Querschnitt, ausgebildet ist. Unter rohrförmig ist dabei ein länglicher Hohlkörper mit beliebiger Querschnittsgeometrie zu verstehen, der sich in Richtung einer Längsachse erstreckt. Die erste und/oder zweite Längsachse ist vorzugsweise als Gerade ausgebildet, jedoch ist auch ein gekrümmter oder unstetiger Verlauf der Längsachsen denkbar. Die Querschnittsgeometrie der ersten oder zweiten Ausgleichskammer, normal zur jeweiligen Längsachse, kann dabei eine beliebige geometrische Form, etwa rechteckig, dreieckig, elliptisch, aufweisen. Es hat sich jedoch aus fertigungstechnischen Gründen als besonders vorteilhaft herausgestellt, wenn der Querschnitt der zweiten Ausgleichskammer normal zur zweiten Längsachse näherungsweise kreisförmig ausgebildet ist. Die Querschnittsgeometrie muss dabei nicht zwangsläufig über die gesamte Längserstreckung der Ausgleichskammern konstant sein, sondern kann variieren.

In einer weiteren bevorzugten Ausführungsvariante des erfindungsgemäßen Saugschalldämpfers ist vorgesehen, dass die erste Längsachse und die zweite Längsachse parallel zueinander verlaufend, vorzugsweise fluchtend, angeordnet sind. Durch den parallelen Verlauf lassen sich die Strömungsverhältnisse in den beiden Ausgleichskammer besonders günstig beeinflussen. Insbesondere wenn die Längsachsen parallel zu einer Vertikalrichtung des Kältemittelkompressors ausgerichtet sind, ist auch der zuvor beschriebene Abfluss-Effekt von über die zweite Öffnung eintretendem und über die erste Öffnung abfließendem Schmiermittel besonders stark ausgeprägt, sodass nur ein vernachlässigbar kleiner Anteil an Schmiermittel über die zweite Öffnung in die Dämpfungskammer gelangt bzw. sich in den Ausgleichskammern ansammeln kann. Wenn die Längsachsen fluchtend angeordnet sind, verlaufen sie einerseits parallel und bilden andererseits eine gemeinsame Längsachse aus.

Um sicherzustellen, dass der Übertritt von Kältemittel zwischen erster Ausgleichskammer und zweiter Ausgleichskammer möglichst ohne Strömungsverluste vonstatten geht, kann in einer Ausführungsvariante vorgesehen sein, dass der Querschnitt der zweiten Öffnung in Richtung der ersten Längsachse gesehen, vorzugsweise in Richtung der ersten und zweiten Längsachse gesehen, den Querschnitt der ersten Öffnung überlappt. Die Überlappung kann dabei vorzugsweise mehr zwischen 25% und 100%, insbesondere zwischen 30% und 80%, besonders bevorzugt zwischen 40% und 60%. In anderen Worten ist der Abstand zwischen erster Längsachse und zweiter Längsachse kleiner der Summe der Radien der beiden Öffnungen, wenn die Querschnitte kreisförmig ausgebildet sind. Unter Querschnitt ist dabei immer der Querschnitt normal zur jeweiligen Längsachse der Ausgleichskammer zu verstehen. Besonders vorteilhaft ist es dabei, wenn der Querschnitt der zweiten Öffnung innerhalb des Querschnitts der ersten Öffnung angeordnet ist, die beiden Öffnungen einander also vollständig überlappen. In anderen Worten ist dabei der Abstand zwischen den Längsachsen kleiner gleich der Differenz des Radius der ersten Öffnung und des Radius der zweiten Öffnung.

Um den Druckausgleich zwischen Saugschalldämpfer und Umgebung, also dem Inneren des Verdichtergehäuses, während des Betriebs des Kältemittelkompressors gewährleisten zu können und so die Ausbildung der oszillierenden Gassäule zu unterstützen, muss das Volumen der Ausgleichskammern eine bestimmte Größe aufweisen. Daher ist in einer weiteren besonders bevorzugten Ausführungsvariante der Erfindung vorgesehen, dass das Volumen der ersten Ausgleichskammer derart dimensioniert ist, dass das Volumen das 0,05-fache bis 2-fache, vorzugsweise das 0,1-fache bis 1-fache, insbesondere das 0,2-fache bis 0,5-fache des Hubvolumens des Kolbens der Kolben-Zylinder-Einheit beträgt. Da der Druckunterschied aufgrund der Kolbenbewegung, genauer aufgrund des Hubvolumens des Kolbens, auftritt, muss auch das Volumen der Ausgleichskammer mit dem Hubvolumen des Kolbens abgestimmt sein. Vorzugsweise beträgt das Volumen der ersten Ausgleichskammer einen Bruchteil des Hubvolumens des Kolbens, etwa ein Zehntel, ein Fünftel oder ein Viertel des Hubvolumens, da der Hauptteil des Kältemittels aus der Kältemittelzuleitung stammt.

Es hat sich als besonders vorteilhaft herausgestellt, wenn die erste Ausgleichskammer als Hauptausgleichskammer fungiert, sodass im Betrieb ein Hauptteil des zum Druckausgleich benötigten Kältemittels über die erste Ausgleichskammer mit der Dämpfungskammer ausgetauscht werden kann, also die erste Ausgleichskammer ein relativ großes Volumen zur Ausbildung einer oszillierenden Gassäule aufweist. Die zweite Ausgleichskammer trägt in diesem Fall während des regulären Betriebs nur einen kleinen Beitrag zum gesamten ausgetauschten Volumen bei und benötigt daher insgesamt ein kleineres Volumen für eine kleinere oszillierende Gassäule. Sobald aber die erste Öffnung durch den Ölsumpf verschlossen ist oder Schmiermittelschaum durch die erste Öffnung angesaugt wird, findet der Druckausgleich über die zweite Öffnung der zweiten Ausgleichskammer, bei Bedarf auch vollständig, statt. Daher ist in einer weiteren besonders bevorzugten Ausführungsvariante vorgesehen, dass das Volumen der zweiten Ausgleichskammer zwischen 5% und 25%, vorzugsweise zwischen 10% und 20%, besonders bevorzugt zwischen 12% und 17%, des Volumens der ersten Ausgleichskammer beträgt.

Da die Querschnittsfläche der ersten bzw. zweiten Öffnung als maßgeblich für das ansaugbare Volumen anzusehen ist, ist aufgrund der oben angeführten Vorteile in einer weiteren besonders bevorzugten Ausführungsvariante vorgesehen, dass die Querschnittsfläche der zweiten Öffnung zwischen 5% und 50%, vorzugsweise zwischen 10% und 30%, insbesondere zwischen 15% und 20%, einer mittleren Querschnittsfläche der ersten Ausgleichskammer beträgt. Die mittlere Querschnittsfläche kann dabei wie zuvor beschrieben berechnet werden. Somit ist sichergestellt, dass die Gassäule in der zweiten Ausgleichskammer eine geringere Amplitude aufweist als die Gassäule der ersten Ausgleichskammer, sodass das Ansaugen von warmen Kältemittel aus dem Inneren des Verdichtergehäuses in die Dämpfungskammer während des normalen Betriebs weitest gehend vermieden ist. Gleichzeitig führt die Verengung im Bereich der zweiten Öffnung dazu, dass Sauggeräusche aus dem Saugschalldämpfer nicht bzw. nur reduziert ins Innere des Verdichtergehäuses gelangen. Der Querschnitt der Öffnungen ist dabei vorzugsweise normal zur jeweiligen Längsachse ausgerichtet. Es kann dabei vorgesehen sein, dass die Querschnittsflächen der ersten und zweiten Öffnung näherungsweise gleich groß sind.

Um die Menge an in die Dämpfungskammer eingesaugtem Schmiermittel zu reduzieren und den Austausch von Kältemittel zwischen den Ausgleichskammern und der Dämpfungskammer zu ermöglichen, ist in einer weiteren bevorzugten Ausführungsvariante der Erfindung vorgesehen, dass ein Übergangskanal die Dämpfungskammer mit der ersten Ausgleichskammer verbindet, um den Austausch von Kältemittel zu ermöglichen, wobei der Übergangskanal im der ersten Öffnung gegenüberliegenden Endbereich der ersten Ausgleichskammer angeordnet ist und/oder dass ein Übergangskanal die Dämpfungskammer mit der zweiten Ausgleichskammer verbindet, um den Austausch von Kältemittel zu ermöglichen. Wenn der Übergangskanal mit der ersten Dämpfungskammer verbunden ist, ist es vorteilhaft wenn der an dem dem Ölsumpf gegenüberliegenden Ende der ersten Ausgleichskammer, vorzugsweise am höchsten Punkt der ersten Ausgleichskammer, in dieselbe einmündet, da über die erste Öffnung in die erste Ausgleichskammer eingesaugtes Schmiermittel erst über die gesamte Längserstreckung der Ausgleichskammer gesaugt werden müsste, um in die Dämpfungskammer gelangen zu können. Da jedoch der Druckausgleich erfindungsgemäß in diesem Fall über die zweite Öffnung passiert, ist die Saugwirkung in der ersten Ausgleichskammer in der Regel zu gering, als dass tatsächlich Schmiermittel oder Schmiermittel-Kältemittel-Schaum in größeren Mengen in die Dämpfungskammer gelangt. Zusätzlich dazu weist die erste Ausgleichskammer in der Regel ein größeres Volumen auf, wobei der Großteil des ein- und ausfließenden Kältemittels im normalen Betriebszustand über die erste Öffnung in den Saugschalldämpfer ein- oder ausströmt. Durch die direkte Verbindung zwischen erster Ausgleichskammer und Dämpfungskammer über den Verbindungskanal können somit auch die Strömungsverluste verringert werden. In alternativen Ausführungsvarianten kann der Übergangskanal die Dämpfungskammer auch mit der zweiten Ausgleichskammer direkt verbinden, also in die zweite Ausgleichskammer einmünden oder jede der Ausgleichskammern ist über einen, vorzugsweise separaten, Übergangskanal mit der Dämpfungskammer verbunden.

Um die durch die Kolbenbewegung bedingten Druckschwankungen im Inneren des Verdichtergehäuses gering zu halten, also die Ausbreitung der Druckschwankungen aus dem Saugschalldämpfer in die Umgebung zu verhindern bzw. zu reduzieren, kann vorgesehen sein, dass eine mittlere Querschnittsfläche des Übergangskanals zwischen 5% und 50%, vorzugsweise zwischen 10% und 30%, insbesondere zwischen 15% und 20%, der mittleren Querschnittsfläche der ersten Ausgleichskammer beträgt.

Eine weitere besonders bevorzugte Ausführungsvariante sieht vor, dass der Übergangskanal parallel zur ersten Längsachse verlaufend angeordnet ist und im ersten oder im dritten Gehäuseteil ausgebildet ist. Dadurch dass der Übergangskanal parallel zur ersten Längsachse der ersten Ausgleichskammer verläuft, kann das Kältemittel ohne nennenswerte Strömungsverluste über die gesamte Länge der ersten Ausgleichskammer angesaugt bzw. ausgeschoben werden. Dies führt während des regulären Betriebs, also wenn die erste Öffnung frei ist, auch zu einer Verringerung des Geräuschpegels des Saugschalldämpfers. Bei der zweiteiligen Ausführung ist der Übergangskanal dabei im ersten Gehäuseteil, also dem Unterteil, ausgebildet während der Übergangskanal in der mehrteiligen, insbesondere der dreiteiligen, Ausführung im dritten Gehäuseteil, also dem Mittelteil, ausgebildet ist.

Die eingangs gestellte Aufgabe wird auch durch einen gekapselten Kältemittelverdichter gelöst, welcher ein, vorzugsweise hermetisch dichtes, Verdichtergehäuse aufweist, in welches Verdichtergehäuse Kältemittel über eine Kältemittelzuleitung zuführbar ist, wobei im Inneren des Verdichtergehäuses eine das Kältemittel zyklisch verdichtende Kolben-Zylinder-Einheit arbeitet mit einem, eine in einer Ventilplatte der Kolben-Zylinder-Einheit angeordnete Ansaugöffnung umfassenden, Ansaugventil, wobei das Verdichtergehäuse einen wannenartig ausgebildeten Bodenbereich zur Aufnahme eines Ölsumpfs zur Schmierung der Kolben-Zylinder-Einheit aufweist, wobei ein das Kältemittel von der Kältemittelzuleitung zum Ansaugventil leitender erfindungsgemäßer Saugschalldämpfer in der Betriebsposition derart im Verdichtergehäuse angeordnet ist, dass die zweite Öffnung bezogen auf den Bodenbereich des Verdichtergehäuses oberhalb der ersten Öffnung angeordnet ist.

Da die jeweiligen Öffnungen der beiden Ausgleichskammern in verschiedenen Höhen relativ zum Bodenbereich des Verdichtergehäuses des Saugschalldämpfers angeordnet sind und damit erfindungsgemäß die zweite Öffnung oberhalb der ersten Öffnung angeordnet ist, ist gewährleistet, dass, selbst wenn die erste, näher am Bodenbereich angeordnete, Öffnung, etwa mit Schmiermittel aus dem Ölsumpf, verschlossen ist, der Druckausgleich mit der Umgebung über die zweite, weiter vom Bodenbereich des Verdichtergehäuses beabstandete, Öffnung gewährleistet ist. Vorzugsweise umfasst der Saugschalldämpfer zumindest zwei Gehäuseteile, insbesondere drei Gehäuseteile, wobei die zweite Öffnung im zweiten, bezogen auf den Bodenbereich oberen, Gehäuseteil des Saugschalldämpfers ausgebildet ist und die erste Öffnung im, bezogen auf den Bodenbereich unteren, ersten Gehäuseteil des Saugschalldämpfers ausgebildet ist.

Eine Ausführungsvariante der Erfindung sieht vor, dass zumindest die zweite Öffnung der zweiten Ausgleichskammer, vorzugsweise die erste Öffnung und die zweite Öffnung, oberhalb eines sich, vorzugsweise in einer Ruhephase des Kältemittelverdichters, ausbildenden Pegels des Ölsumpfs angeordnet ist.

Der Pegel des Ölsumpfs bildet sich in der Regel im Auslieferungszustand, bevor der Kältemittelverdichter das erste Mal in Betrieb genommen wurde, oder nach einer Ruhephase, wenn der Kältemittelverdichter über einen längeren Zeitraum nicht in Betrieb war, aus, da in beiden Fällen das zur Schmierung der Kolben-Zylinder-Einheit vorgesehene Schmiermittel nicht zur Kolben-Zylinder-Einheit gefördert wird, sondern sich aufgrund der Schwerkraft im Bodenbereich des Verdichtergehäuses sammelt bzw. absetzt. Der Pegel des Ölsumpfs kann aufgrund der eingangs geschilderten Ausbildung eines flüssigen Kältemittel-Schmiermittel-Gemisches variieren. Wie bereits zuvor ausführlich beschrieben, kann der Druckausgleich zwischen Dämpfungskammer und dem Inneren des Verdichtergehäuses sichergestellt werden, wenn die zweite Öffnung der zweiten Ausgleichskammer oberhalb des Pegels des Ölsumpfs angeordnet ist. Somit wird verhindert, dass bei der Ausbildung eines Schmiermittel-Kältemittel-Gemischs im Bodenbereich des Kältemittelverdichters bzw. beim Aufschäumen des Gemisches auch die zweite Öffnung verstopft. Damit ist der Druckausgleich auch in diesen Betriebszuständen gewährleistet.

Um den Saugschalldämpfer und damit die Ausgleichskammern bzw. die Öffnungen der Ausgleichskammern in Bezug zum Bodenbereich des Verdichtergehäuses richtig positionieren zu können, ist in einer Ausführungsvariante der Erfindung vorgesehen, dass der Befestigungsabschnitt des Saugschalldämpfers an einem Zylinderkopf der Kolben-Zylinder-Einheit befestigt ist. Der Befestigungsabschnitt kann dabei beispielsweise über Schraub- oder Klemmverbindungen am Zylinderkopf befestigt sein. Besonders vorteilhaft ist es dabei, wenn der Befestigungsabschnitt im Bereich des Auslasses bzw. durch den Auslass selbst ausgebildet ist und zumindest abschnittsweise im Zylinderkopf aufgenommen ist, wobei ein Zylinderkopfdeckel den Befestigungsabschnitt im Zylinderkopf klemmt.

In einer Ausführungsvariante des erfindungsgemäßen Kältemittelverdichters ist vorgesehen, dass ein flexibles Verbindungselement die Kältemittelzuleitung und die vom Einlass ausgebildete Einlassöffnung des Saugschalldämpfers miteinander verbindet, um Kältemittel aus der Kältemittelzuleitung über den Saugschalldämpfer direkt zum Ansaugventil strömen zu lassen. Da das aus der Kältemittelzuleitung stammende Kältemittel durch das flexible Verbindungselement direkt in den Saugschalldämpfer strömt und nicht in das Innere des Verdichtergehäuses strömen kann, ist die erfindungsgemäße Sicherstellung des Druckausgleichs zu jedem Betriebszeitpunkt von gesteigerter Bedeutung, um eine Beschädigung oder Zerstörung des Saugschalldämpfers und/oder des flexiblen Verbindungselements zu verhindern. In anderen Worten stellt erst die erfindungsgemäße Gestaltung und Positionierung des Saugschalldämpfers sicher, dass das flexible Verbindungselement nicht durch Druckstöße im Saugschalldämpfer zerstört oder beschädigt wird und so seine Funktionalität beibehält.

Theoretisch könnte sogar vorgesehen werden, dass die erste Öffnung der ersten Ausgleichskammer unterhalb des Pegels des Ölsumpfs angeordnet ist. Da der Druckausgleich in den Betriebszuständen, in denen der Ölsumpf seinen Maximalpegel erreicht hat, über die zweite Öffnung der zweiten Ausgleichskammer passiert, kann der vorhandene Bauraum im Verdichtergehäuse durch den Saugschalldämpfer optimal ausgenutzt werden, sodass die erste Öffnung unterhalb des Pegels angeordnet werden kann. Nachdem der Schmiermittel-Kreislauf nach den ersten Umdrehungen der Kurbelwelle wieder aufgenommen ist, sinkt der Pegel des Ölsumpfs auf Betriebsniveau, welches unterhalb des Maximalpegels liegt, ab, sodass die erste Öffnung freigegeben ist und auch über die erste Öffnung der Druckausgleich stattfinden kann. Grundsätzlich würde es bei einer derartigen Anordnung jedoch dazu kommen, dass Schmiermittel oder Schmiermittel-Kältemittel-Gemisch durch die Ölablassöffnung in den Saugschalldämpfer eintritt bzw. nicht über die Ölablassöffnung aus dem Dämpfungsvolumen austreten kann.

Um den im Verdichtergehäuse zur Verfügung stehenden Bauraum möglichst platzsparend nutzen zu können und gleichzeitig ein Abfließen von Schmiermittel aus der ersten Ausgleichskammer zu ermöglichen, ist es vorteilhaft, wenn die erste Öffnung der ersten Ausgleichskammer in der Betriebsposition dem Bodenbereich des Verdichtergehäuses zugewandt ist, also in anderen Worten beispielsweise an einer Unterseite des Saugschalldämpfers ausgebildet ist. Da in diesem Fall die Gefahr der Verstopfung durch Schmiermittel bzw. des Ansaugens von Schmiermittel durch die erste Öffnung besteht, ist die zweite Öffnung der zweiten Ausgleichskammer im Betriebszustand dem Bodenbereich abgewandt, also in anderen Worten beispielsweise an einer Seitenwand oder an der Oberseite des Saugschalldämpfers ausgebildet, um den Druckausgleich sicher zu gewährleisten. Daher ist in einer weiteren Ausführungsvariante der Erfindung vorgesehen, dass die erste Öffnung im Betriebszustand dem Bodenbereich zugewandt ist und die zweite Öffnung im Betriebszustand dem Bodenbereich abgewandt ist.

Besonders vorteilhaft ist es, den Saugschalldämpfer mit einem geteilten Gehäuse herzustellen, um beispielsweise die Fertigung mittels eines Spritzgussverfahrens zu ermöglichen. In der Betriebsposition, sind die Gehäuseteile dicht miteinander verbunden, sodass Kältemittel aus dem Saugschalldämpfer nur über den Auslass oder über die Ausgleichskammern entweichen kann. Eines der Gehäuseteile ist dabei in der Betriebsposition als Unterteil des Saugschalldämpfers ausgebildet, also zumindest abschnittsweise, nämlich im Bereich seiner Unterseite, dem Bodenbereich des Verdichtergehäuses zugewandt, wobei die Unterseite des ersten Gehäuseteils theoretisch zumindest abschnittsweise im Ölsumpf angeordnet sein kann. Ein weiteres Gehäuseteil ist dementsprechend dem Bodenbereich abgewandt und bildet das Oberteil oder den Deckel des Saugschalldämpfers aus.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Schnittansicht eines Kältemittelverdichters mit einem erfindungsgemäßen Saugschalldämpfer;
- Fig. 2: eine Schnittdarstellung einer ersten Ausführungsvariante des in einem Verdichtergehäuse angeordneten Saugschalldämpfers in einer Betriebsposition;
- Fig. 3: eine alternative Schnittansicht des Saugschalldämpfers nach Fig. 2;
- Fig. 4: eine isometrische Ansicht des Saugschalldämpfers nach Fig. 2;
- Fig. 5: eine isometrische Ansicht einer zweiten Ausführungsvariante des Saugschalldämpfers;
- Fig. 6: eine Schnittdarstellung des Saugschalldämpfers nach Fig. 5.

### WEGE ZUR AUSFÜHRUNG DER ERFINDUNG

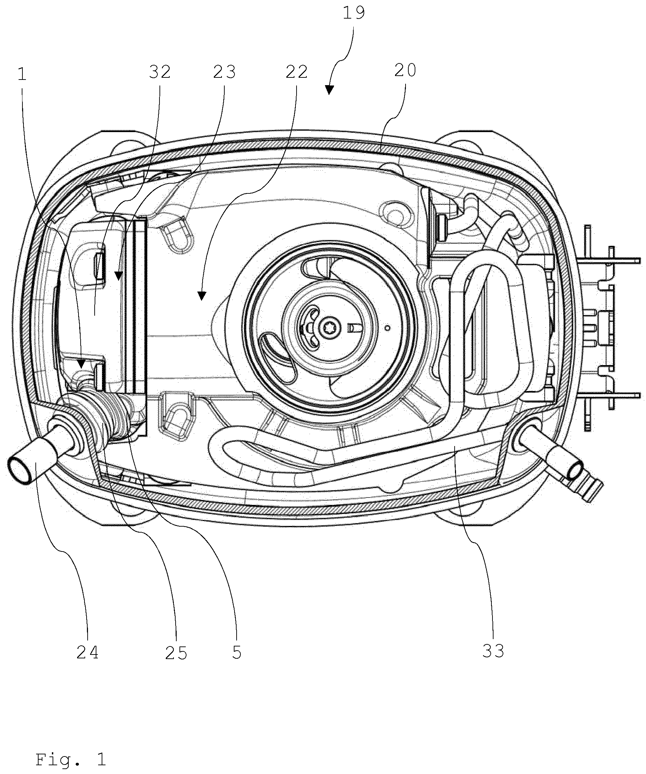

Figur 1 zeigt eine Ausführungsvariante eines erfindungsgemäßen, vorzugsweise hermetisch, gekapselten Kältemittelverdichters 19 der einen erfindungsgemäßen Saugschalldämpfer 1 aufweist. Der Kältemittelverdichter 19 umfasst ein, vorzugsweise hermetisch, gekapseltes Verdichtergehäuse 20, in dessen Inneren im Betriebszustand eine das gasförmige Kältemittel zyklisch verdichtende Kolben-Zylinder-Einheit 22 arbeitet, welche über Antriebsmittel, wie einen Motor, insbesondere einen Elektromotor, angetrieben bzw. antreibbar ist. Die Kolben-Zylinder-Einheit 22 umfasst einen Zylinder mit einem Zylinderkopf 23 und einen im Zylinder geführten Kolben, wobei der Kolben im Ansaugtakt Kältemittel über ein Ansaugventil in den Zylinder einsaugt und das Kältemittel im Verdichtungstakt, vor dem Ausschieben in eine Druckstrecke 33 über ein Druckventil, auf ein höheres Druckniveau pumpt. Über die Druckstrecke 33 wird das verdichtete Kältemittel aus dem Kältemittelverdichter 19 in den Kältemittelkreislauf überführt. Die Ventile verschließen jeweils über einen Kurbelwinkel von etwa 180° die jeweiligen Öffnungen in einer im Zylinderkopf 23 angeordneten Ventilplatte.

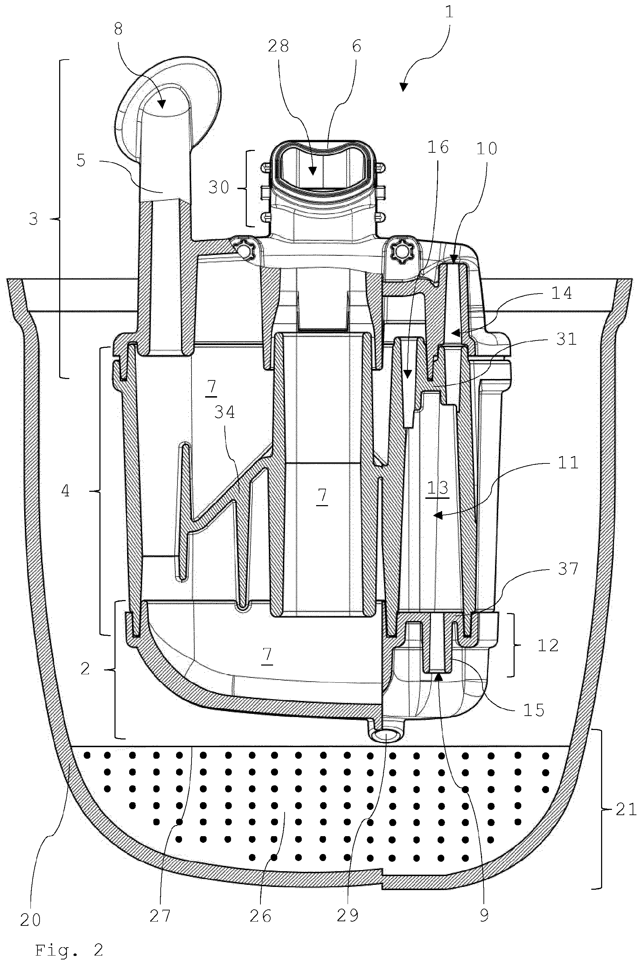

Um das Geräuschniveau des Kältemittelverdichters 19 beim Ansaugvorgang so gering wie möglich zu halten, ist ein Saugschalldämpfer 1 in einer Betriebsposition am Zylinderkopf 23 befestigt, durch welchen Saugschalldämpfer 1 in den Kältemittelverdichter 19 einströmendes Kältemittel von einer in das Verdichtergehäuse 20 einmündenden Kältemittelzuleitung 24 hin zum Ansaugventil strömen kann bzw. geführt wird. In der vorliegenden Abbildung, die den Kältemittelverdichter 19 von oben zeigt, ist der Saugschalldämpfer 1 zu einem großen Teil von einem Zylinderkopfdeckel 32 des Zylinderkopfs 23 verdeckt. Insbesondere zu erkennen ist aber ein einen vom Grundkörper des Saugschalldämpfers 1 abragender Einlass 5 des Saugschalldämpfers 1, der eine Einlassöffnung 8 (siehe Fig. 2) umfasst. Die Einlassöffnung 8 des Einlasses 5 ist in der Betriebsposition so nah als möglich an der Kältemittelzuleitung 24 angeordnet.

Die in der Folge beschriebenen konstruktiven Details des Saugschalldämpfers 1, die aufgrund der dargestellten Anordnung des Saugschalldämpfers 1 unterhalb des Zylinderkopfdeckels 32 nicht sichtbar sind, sind in den folgenden Abbildungen dargestellt. Der Saugschalldämpfer 1 weist einen Auslass 6 auf, über welchen das Kältemittel im Betriebszustand während des Ansaugtakts aus dem in die Kolben-Zylinder-Einheit 22 strömt bzw. gesaugt wird. Dabei bildet der Auslass 6, wie in den Figuren 2, 3 und 6 dargestellt, einen Befestigungsabschnitt 30 aus, welcher Befestigungsabschnitt 30 zumindest abschnittsweise im Zylinderkopf 23 aufgenommen ist und durch eine Öffnung des Zylinderkopfdeckels 32 an der Kolben-Zylinder-Einheit 22 festgeklemmt ist, sodass eine Auslassöffnung 28 des Auslasses 6 möglichst nah am Ansaugventil positioniert ist. Den Hauptteil des Volumens des Saugschalldämpfers 1 nimmt eine Dämpfungskammer 7 ein, die in Strömungsrichtung des Kältemittels zwischen Einlass 5 und Auslass 6 angeordnet ist und, in an sich bekannter Weise, zur Dämpfung des Schalls nach dem Helmholtz-Prinzip ausgelegt ist.

Die Hauptabmessung des Saugschalldämpfers 1 ist im vorliegenden Ausführungsbeispiel die Höhenrichtung, welche im Wesentlichen der Vertikalrichtung entspricht. In der Betriebsposition des Saugschalldämpfers 1 entspricht die Höhenrichtung des Saugschalldämpfers 1 der Höhenrichtung des Kältemittelverdichters 19.

Um das aus der Kältemittelzuleitung 24 stammende Kältemittel direkt und ohne Vermischung bzw. unter minimaler Vermischung mit im Inneren des Verdichtergehäuses 20 befindlichem, erwärmten Kältemittel in den Saugschalldämpfer 1 leiten zu können, ist im vorliegenden Ausführungsbeispiel ein flexibles Verbindungselement 25 zwischen der Kältemittelzuleitung 24 und dem Einlass 5 angeordnet, welches den Abstand zwischen dem Einlass 5 und dem Verdichtergehäuse 20 im Bereich der Kältemittelzuleitung 24 überbrückt und als Leitung für das eintretende Kältemittel fungiert. Da sich die Kolben-Zylinder-Einheit 22 durch im Betrieb auftretende Schwingungen relativ zum Verdichtergehäuse 20 bewegen kann, ist das Verbindungselement 25 flexibel ausgebildet, beispielsweise umfasst es einen rohrförmigen Kunststoffteil, um die Relativbewegungen ausgleichen zu können.

Zur Schmierung der beweglichen Teile der Kolben-Zylinder-Einheit 22 bzw. der Antriebsmittel ist eine definierte Menge an Schmiermittel im Kältemittelverdichter 19 vorgesehen. Ein Teil dieses Schmiermittels setzt sich im Betriebszustand in einem wannenartigen Bodenbereich 21 des Verdichtergehäuses 20 als Ölsumpf 26 (siehe Figur 2) ab, von wo es während des Betriebs laufend, beispielsweise über eine Schmierbohrung im Rotor des Elektromotors, in die zu schmierenden Bereiche gefördert wird. Mit anderen Worten bildet sich ein Schmiermittel-Kreislauf aus, in dem sich jeweils ein Teil des Schmiermittels im Ölsumpf 26 befindet und ein Teil des Schmiermittels zur Schmierung in Richtung der gefördert Kolben-Zylinder-Einheit 22 wird, wobei sich das geförderte Schmiermittel nach dem Durchlauf des Schmiermittel-Kreislaufs wieder im Ölsumpf 26 sammelt. Durch Undichtigkeiten in der Kolben-Zylinder-Einheit 22 und durch Schmiermittelnebel, der sich im Inneren des Verdichtergehäuses 20 ausbildet und während des Betriebs über den Saugschalldämpfer 1, wie in der Folge beschrieben, in die Kolben-Zylinder-Einheit 22 gelangen kann, befindet sich auch immer ein Schmiermittel-Anteil im Kältemittelkreislauf.

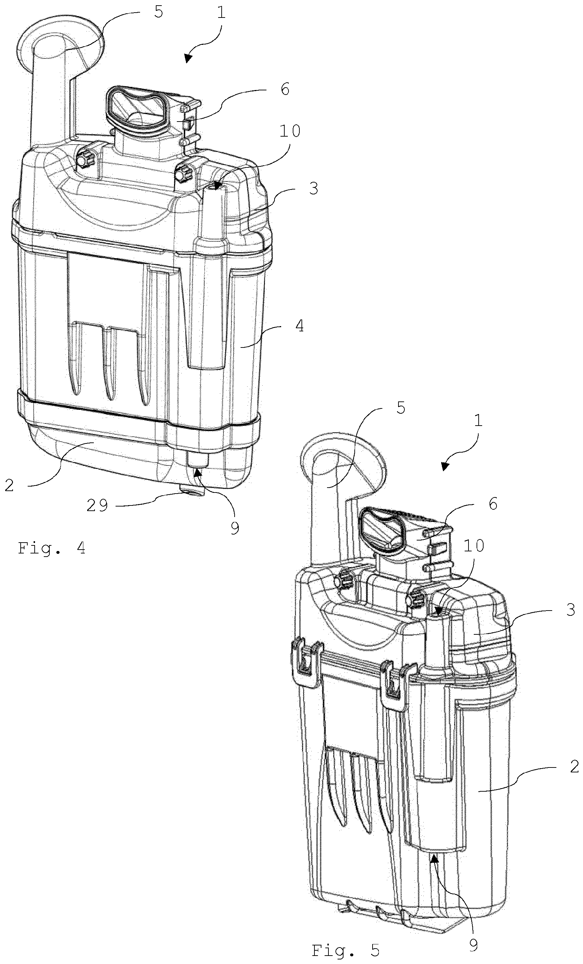

Figur 2 zeigt nun den erfindungsgemäßen Saugschalldämpfer 1 im Detail, der in seiner Betriebsposition, die der Position in Fig. 1 entspricht, im Inneren des Verdichtergehäuses 20 angeordnet ist. Die Ansicht entspricht einem Schnitt parallel zur Höhenrichtung. Der Übersichtlichkeit halber sind in dieser Abbildung die oben beschriebenen Komponenten des Kältemittelverdichters 19, mit Ausnahme der unteren Hälfte des Verdichtergehäuses 20, nicht dargestellt. Um alle erfindungsgemäßen Details des Saugschalldämpfers 1 darstellen zu können, ist die Schnittdarstellung als abgesetzter Schnitt ausgeführt, wobei die Schnittebene im vorliegenden Ausführungsbeispiel in etwa im Bereich einer Ölablassbohrung 29 nach vorne versetzt ist. Insbesondere in der Zusammenschau mit Fig. 4 ist der gewählte Schnittverlauf nachvollziehbar.

Der Saugschalldämpfer 1 besteht aus einem ersten Gehäuseteil 2, welches in der Betriebsposition das Unterteil des Saugschalldämpfers 1 darstellt, sodass seine Grundfläche dem Bodenbereich 21 des Verdichtergehäuses 20 zugewandt ist, einem zweiten Gehäuseteil 3, welches in der Betriebsposition das Oberteil des Saugschalldämpfers 1 darstellt, sodass seine Deckfläche vom Bodenbereich 21 des Verdichtergehäuses 20 abgewandt ist, und einem dritten Gehäuseteil 4 welches im Wesentlichen als Mantelfläche des Saugschalldämpfers 1 fungiert und eine Reihe von Zwischen- bzw. Trennwänden 34 aufweist, die angeordnet sind, um eine Schalldämpfung nach dem Helmholtz-Prinzip zu ermöglichen. Die Gehäuseteile 2,3,4 bestehen aus einem, vorzugsweise thermoplastischem, Kunststoff und sind getrennt voneinander herstellbar, etwa mittels eines Spritzgussverfahrens. In der Betriebsposition sind die beiden Gehäuseteile 2,3,4 gasdicht miteinander verbunden, beispielsweise durch eine Klemmverbindung, sodass an der Trennfläche zwischen den beiden Gehäuseteilen 2,3 kein Kältemittel aus dem Saugschalldämpfer 1 austreten kann. Zu diesem Zweck können die Gehäuseteile 2,3,4, wie in der Abbildung zu erkennen, durch Nut-und-Feder Verbindungen miteinander verbunden sein, wobei eine sich ausbildenden dünnen Schmiermittelfilm im Betriebszustand zur Dichtigkeit beiträgt. Es wäre alternativ auch denkbar, dass die Gehäuseteile 2,3,4 miteinander verschweißt sind.

Sowohl der Einlass 5, über welchen im Betriebszustand des Kältemittelverdichters 19 das aus dem Verdampfer stammende Kältemittel in den Saugschalldämpfer 1 einströmt, als auch der Auslass 6, über welchen im Betriebszustand des Kältemittelverdichters 19 Kältemittel aus dem Saugschalldämpfer 1 in Richtung des Ansaugventils der Kolben-Zylinder-Einheit 22 strömt, sind dabei am zweiten Gehäuseteil 3 ausgebildet und ragen von der Oberseite des zweiten Gehäuseteils 3 ab, wobei der Einlass 5 sich im Wesentlichen rohrförmig parallel zu einer Höhenrichtung in Richtung der Kältemittelzuleitung 24 erstreckt und der Auslass 6 einen Knick aufweist, welcher Knick etwa 60° beträgt. Eine Achse der endseitig am Auslass 6 angeordneten Einlassöffnung 8 schließt dabei einen rechten Winkel mit der Höhenrichtung ein, sodass das Kältemittel beim Einsaugen durch den Auslass 6 um etwa 90° umgelenkt wird.

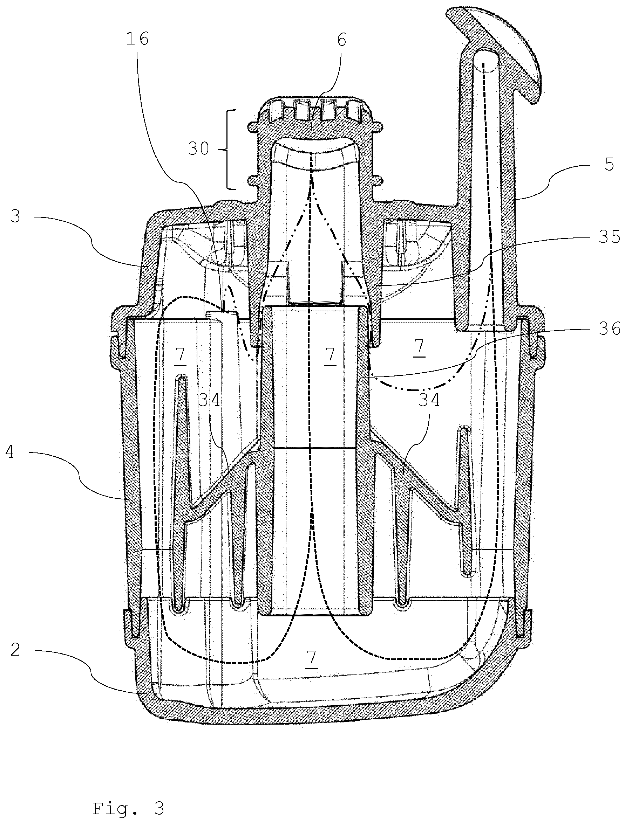

Im Inneren des Saugschalldämpfers 1 ist die Dämpfungskammer 7 ausgebildet, die mehrere miteinander in Verbindung stehende Dämpfungsvolumina umfasst, welche durch die Zwischenwände bzw. Trennwände 34 voneinander getrennt sind, um den an sich bekannten Dämpfungseffekt zu erreichen, wie auch in Fig. 3 deutlich zu erkennen ist. Der Hauptteil der der Dämpfungskammer 7 wird dabei vom dritten Gehäuseteil 4 ausgebildet.

Aus den eingangs beschriebenen Gründen, nämlich dem Abmildern des Druckabfalls im Ansaugtakt, dem Nachströmen des Kältemittels im Verdichtungstakt und der Verdampfung von flüssigem Kältemittel im Saugschalldämpfer 1, muss ein Druckausgleich mit der Umgebung, also mit dem Inneren des Verdichtergehäuses 20, gewährleistet sein.

Erfindungsgemäß ist der Druckausgleich über zwei Ausgleichskammern 11,14, die jeweils eine Öffnung 9,10 zur Kommunikation mit der Umgebung aufweisen, gewährleistet, wobei die Ausgleichkammern 11,14 mit der Dämpfungskammer 7 verbunden sind, sodass im Ansaugtakt Kältemittel aus den Ausgleichskammern 11,14 in die Dämpfungskammer 7 übertreten kann bzw. im Verdichtungstakt umgekehrt Kältemittel aus der Dämpfungskammer 7 in die Ausgleichskammern 11,14 übertreten kann. Sowohl die erste Ausgleichskammer 11 als auch die zweite Ausgleichkammer 14 sind dabei in einem vorderen, seitlichen Bereich des Saugschalldämpfers 1 ausgebildet, sodass ein möglichst großer Abstand zwischen Einlass 5 und den Ausgleichkammern 11,14 bzw. zwischen Auslass 6 und den Ausgleichkammern 11,14 eingestellt ist. Die erste Ausgleichskammer 11 bildet die erste Öffnung 9 im vorliegenden Fall endseitig aus und die zweite Ausgleichskammer 14 bildet die zweite Öffnung 10 ebenfalls endseitig aus. Dadurch ist im vorliegenden Ausführungsbeispiel die erste Öffnung 9 an der Unterseite des ersten Gehäuseteils 2 und die zweite Öffnung 10 auf der Oberseite des zweiten Gehäuseteils 3 angeordnet. Durch die Anordnung der ersten Öffnung 9 an der Unterseite des ersten Gehäuseteils 2 kann Schmiermittel aus der ersten Ausgleichskammer 11 durch die Schwerkraftwirkung direkt in den Ölsumpf 26 abfließen bzw. abtropfen.

Im Boden der Dämpfungskammer 7, die durch den Boden des ersten Gehäuseteils 2 ausgebildet ist, ist eine Ölablassöffnung 29 angeordnet, über welche Ölablassöffnung 29 in der Dämpfungskammer 7 angesammeltes Schmiermittel abfließen kann. Das sich ansammelnde Schmiermittel stammt in der Regel aus dem Ölsumpf 26 und gelangt in geringen Maßen beim Ansaugen durch die Ausgleichskammern 11,14 durch die unvermeidbare, wenngleich geringe, Vermischung von aus der Kältemittelzuleitung 24 stammendem Kältemittel und aus dem Inneren des Verdichtergehäuses 20 stammendem Kältemittel in den Saugschalldämpfer 1. Auch das aus der Kältemittelzuleitung 24 stammende Kältemittel enthält in der Regel einen kleinen Schmiermittel-Anteil, der durch Undichtigkeit in der Kolben-Zylinder-Einheit 22 in das verdichtete bzw. zu verdichtende Kältemittel gelangt. Diese Komponente bildet im Betriebszustand in der Regel den maßgeblichen Anteil des sich im Saugschalldämpfer 1 sammelnden Schmiermittels. Das im Inneren des Verdichtergehäuses 20 befindliche Kältemittel beinhaltet auch Schmiermittel in Tropfen-Form aus dem sich ausbildenden Schmiermittel-Nebel. Diese geringen Mengen an Schmiermittel legen sich an den Wänden der Dämpfungskammer 7 ab und fließen dann in den Bodenbereich der Dämpfungskammer 7, um durch die Ölablassöffnung 29 wieder in den Ölsumpf 26 gelangen zu können. Die Ölablassöffnung 29 ist schon aufgrund ihrer Aufgabe und ihrer Gestaltung keine Ausgleichskammer im Sinne der Erfindung, da sie in der Regel durch einen kleinen Ölfilm verschlossen ist und jedenfalls nicht richtig dimensioniert ist, um einen Druckausgleich mit dem Inneren des Verdichtergehäuses 20 zu ermöglichen. Wenn tropfenförmiges Schmiermittel in geringen Mengen auch in den Zylinder eingesaugt wird, so durchläuft es den Gesamten Kältemittelkreislauf und gelangt über den Einlass 5 wieder zurück in den Saugschalldämpfer 1 von wo es wiederum über die Ölablassöffnung 29 in den Ölsumpf 26 gelangt.

Während des Betriebs des Kältemittelverdichters 19, insbesondere während des Anfahrvorgangs, kann es in unterschiedlichen Betriebszuständen, wie eingangs ausführlich beschrieben, zu einem Ansteigen eines Pegels 27 des Ölsumpfs 26 kommen. Dies kann etwa der Fall sein, wenn das Kältemittel kondensiert und sich ein flüssiges Kältemittel-Schmiermittel-Gemisch ausbildet oder wenn das Kältemittel-Schmiermittel-Gemisch aufgrund des beim Anfahren des Kompressors gebildeten Unterdrucks kocht und sich ein Kältemittel-Schmiermittel-Schaum bildet, welches den Pegel 27 - zumindest temporär - ansteigen lässt. In diesen Betriebszuständen kann es dazu kommen, dass die erste Öffnung 9 durch den Ölsumpf 26 verschlossen ist. Wäre, wie nach dem Stand der Technik bekannt, nur die erste Ausgleichskammer 11 vorgesehen, so würde ein Verschluss der ersten Öffnung 9 an der Unterseite des ersten Gehäuseteils 2 dazu führen, dass der Druckausgleich mit der Umgebung nicht mehr stattfinden kann, sodass einerseits während des Ansaugtakts der Druckabfall in der Dämpfungskammer 7 nicht ausgeglichen werden kann und weniger Kältemittel in die Kolben-Zylinder-Einheit 22 gesaugt wird, was zu einem Leistungsverlust führt. Andererseits bestünde die Gefahr, dass flüssiges Schmiermittel oder flüssiges Kältemittel-Schmiermittel-Gemisch oder Kältemittel-Schmiermittel-Schaum in die Kolben-Zylinder-Einheit 22 eingesaugt wird und dort die Ventilfedern beschädigt. Außerdem kann es beim Eintritt und Verdampfen von flüssigem Kältemittel durch die Kältemittelzuleitung 24 dazu kommen, dass der beim Verdampfen entstehende Überdruck nicht ausgeglichen werden kann und es zu einer Beschädigung des Saugschalldämpfers 1 oder des flexiblen Verbindungselements 25 kommt.

Um diese Gefahren zu vermeiden, ist die zweite Ausgleichskammer 14 mit der zweiten Öffnung 10 vorgesehen, wobei die zweite Öffnung 10 erfindungsgemäß oberhalb der ersten Öffnung 9 angeordnet ist, also einen größeren Abstand zum Bodenbereich 21 und damit auch zum Pegel 27 des Ölsumpfs 26 aufweist als die erste Öffnung 9. Somit kann, selbst wenn ein Druckausgleich über die erste Öffnung 9 nicht mehr möglich ist oder wenn über die erste Öffnung 9 Schmiermittel oder Schmiermittelschaum angesaugt wird, trotzdem gasförmiges Kältemittel im Ansaugtakt aus dem Inneren des Verdichtergehäuses 20 in die zweite Ausgleichskammer 14 eintreten bzw. Kältemittel im Verdichtungstakt aus der zweiten Ausgleichskammer 14 in das Innere des Verdichtergehäuses 20 austreten, sodass der Druckausgleich der Dämpfungskammer 7 gewährleistet ist. Die Anordnung des Saugschalldämpfers 1 im Verdichtergehäuse 20 erfolgt durch die Gestaltung des Befestigungsabschnitts 30, der vom Auslass 6 ausgebildet und vom Zylinderkopfdeckel 32 an der Kolben-Zylinder-Einheit 22 festgeklemmt ist. Der Befestigungsabschnitts 30 ist dabei derart ausgebildet, dass die erste Öffnung 9 näher am Bodenbereich 21 angeordnet ist als die zweite Öffnung 10 bzw. die zweite Öffnung 10 bezogen auf den Bodenbereich 21 oberhalb der ersten Öffnung 9 angeordnet ist, wenn der Saugschalldämpfer 1 über den Befestigungsabschnitt 30 an der Kolben-Zylinder-Einheit 22 befestigt ist.

Die erste Ausgleichskammer 11 ist im vorliegenden Ausführungsbeispiel sowohl im ersten Gehäuseteil 2 als auch im dritten Gehäuseteil 4 ausgebildet, wobei die erste Öffnung 9 dem Bodenbereich 21 zuweist, jedoch gegenüber dem Boden bzw. dem tiefsten Punkt des Saugschalldämpfers 1 nach oben versetzt ist. In anderen Worten begrenzt der erste Gehäuseteil 2 einen ersten Teilabschnitt 12 und der dritte Gehäuseteil 4 einen zweiten Teilabschnitt 13 der ersten Ausgleichskammer 11, sodass die erste Öffnung 9 vom ersten Teilabschnitt 12 ausgebildet ist. Den Hauptteil des Volumens der ersten Ausgleichskammer 11 bildet dabei der zweite Teilabschnitt 13, der sowohl eine größere Höhe als auch eine größere mittlere Querschnittsfläche aufweist als der erste Teilabschnitt 12, aus. Der erste Teilabschnitt 12 wird dagegen von einem rohrförmigen Fortsatz 15 des ersten Gehäuseteils 2 ausgebildet, der eine geringere Querschnittsfläche aufweist als der zweite Teilabschnitt 13. Der die erste Öffnung 9 aufweisende rohrförmige Fortsatz 15 fungiert somit als Querschnittsverengung, sodass die Querschnittsfläche der ersten Öffnung 9 in einfacher Art und Weise definiert werden kann. Dabei ist deutlich zu erkennen, dass der zweite Teilabschnitt 13 nach unten hin von einem den rohrförmigen Fortsatz 15 aufweisenden, vom ersten Gehäuseteil 2 ausgebildeten unteren Begrenzungsabschnitt 37 begrenzt ist, über den die Querschnittsverengung realisiert ist. Dadurch, dass erstes Gehäuseteil 2 und drittes Gehäuseteil 4 separat voneinander ausgebildet sind, ist der untere Begrenzungsabschnitt 37 so wie auch die Umwandung des zweiten Teilabschnitts 13 in einfacher Art und Weise mittels Spritzgussverfahren herstellbar. Die Dichtheit zwischen den beiden Gehäuseteilen 2,4 wird wiederum über eine Nut-und-Feder Verbindung realisiert. Es versteht sich von selbst, dass in alternativen Ausführungsvarianten die erste Öffnung 9 direkt vom unteren Begrenzungsabschnitt 37 ausgebildet sein kann, ohne rohrförmigen Fortsatz 15.

Die erste Ausgleichskammer 11 begrenzt dabei ein Volumen, das etwa 10% bzw. dem 0,1-fachen des Hubvolumens des Kolbens entspricht, wobei das Volumen der ersten Ausgleichskammer 11 etwa 10-mal so groß ist wie das entsprechende Volumen der zweiten Ausgleichskammer 14.

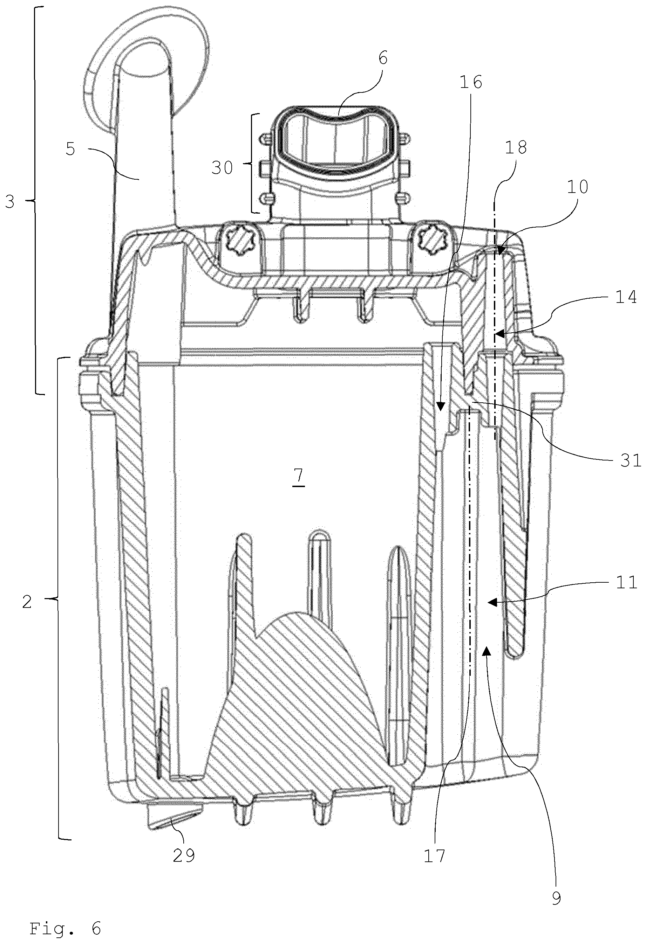

Die zweite Ausgleichskammer 14 ist zumindest abschnittsweise im zweiten Gehäuseteil 3 ausgebildet, wobei zumindest der die zweite Öffnung 10 aufweisende Teil der zweiten Ausgleichskammer 14 im zweiten Gehäuseteil 3 ausgebildet ist, um einen möglichst großen Abstand der zweiten Öffnung 10 zum Bodenbereich 21 herzustellen. Im vorliegenden Ausführungsbeispiel ist die zweite Ausgleichskammer 14 sowohl im zweiten 3 als auch im dritten Gehäuseteil 4 ausgebildet. Die erste 11 und die zweite Ausgleichskammer 14 sind direkt miteinander verbunden, sodass ein direkter Austausch von Kältemittel zwischen den Ausgleichskammern 11,14 stattfinden kann. Dazu mündet das der zweiten Öffnung 10 gegenüberliegende, in diesem Fall untere, Ende der zweiten Ausgleichskammer 14 in das der ersten Öffnung 9 gegenüberliegende, in diesem Fall obere, Ende der ersten Ausgleichskammer 11 ein. Dieses obere Ende der ersten Ausgleichskammer 11 ist durch einen vom dritten Gehäuseteil 4 ausgebildeten oberen Begrenzungsabschnitt 31 ausgebildet. Der an die zweite Öffnung 10 angrenzende Abschnitt der zweiten Ausgleichskammer 14 ist durch das zweite Gehäuseteil 3 ausgebildet und der an den oberen Begrenzungsabschnitt 31 angrenzende Abschnitt durch das dritte Gehäuseteil 4, sodass die Höhe der zweiten Ausgleichskammer 14 maximiert werden kann. Die zweite Ausgleichskammer 14 ist rohrförmig und sich entlang einer zweiten Längsachse 18 (siehe Fig. 6) erstreckend ausgebildet, wobei der Querschnitt der zweite Ausgleichskammer 14 normal zur zweiten Längsachse 18 näherungsweise kreisförmig ist. Die zweite Längsachse 18 verläuft geradenförmig. Der Querschnitt der zweiten Ausgleichskammer 14 verändert sich über die gesamte Erstreckung der zweiten Ausgleichskammer 14 leicht, wobei ein Maximum an der Trennfläche zwischen dem zweiten und dritten Gehäuseteil 3,4 erreicht wird. Die Querschnittsfläche der zweiten Öffnung 10 entspricht im Wesentlichen der Querschnittsfläche der ersten Öffnung 9.

Durch die oben beschriebene Anordnung sind die erste Öffnung 9 und die zweite Öffnung 10 einander gegenüberliegend angeordnet, was den zusätzlichen Effekt hervorruft, dass Schmiermittel, welches durch die zweite Öffnung 10 in die zweite Ausgleichskammer 14 eintritt, entlang der Wandung der zweiten Ausgleichskammer 14 und der daran anschließenden ersten Ausgleichskammer 11 hinunterrinnen kann und schließlich durch die erste Öffnung 9 wieder aus dem Saugschalldämpfer 1 austritt, ohne dass es in die Dämpfungskammer 7 eindringen kann oder sich in einer der Ausgleichskammern 11,14 sammelt. Dieser Effekt kann in alternativen Ausführungsvarianten selbstverständlich auch erreicht werden, wenn die Öffnungen 9,10 in der Höhe zueinander versetzt sind und die miteinander direkt verbundenen Ausgleichskammern 11,14 ein stetiges Gefälle ausbilden. Betrachtet man die beiden Öffnungen 9,10 von oben, also in Richtung der Längsachsen 17,18 so überlappen sich die Öffnungen 9,10 im vorliegenden Ausführungsbeispiel.

Um den Austausch von gasförmigen Kältemittel zwischen den Ausgleichskammern 11,14 und der Dämpfungskammer 7 zu ermöglichen, ist ein Übergangskanal 16 im dritten Gehäuseteil 4 ausgebildet, der die Dämpfungskammer 7 direkt mit der ersten Ausgleichskammer 11 und indirekt mit der, in die erste Ausgleichskammer 11 einmündenden, zweiten Ausgleichskammer 14 verbindet. Der Übergangskanal 16 mündet dabei, ebenso wie die zweite Ausgleichskammer 14 in das der ersten Öffnung 9 gegenüberliegende Ende der ersten Ausgleichskammer 11, also in den oberen Begrenzungsabschnitt 31, ein, sodass die Strecke zwischen dem einmündenden Ende des Übergangskanals 16 und den jeweiligen Öffnungen 9,10 der ersten 11 bzw. zweiten Ausgleichskammer 14 so groß wie möglich ist. Um eine einfache Herstellbarkeit beim Spritzgießen zu gewährleisten, ist der Übergangskanal 16 parallel zu den beiden Ausgleichskammern 11,14 ausgerichtet. Zusätzlich dazu liegt die Querschnittsfläche des Übergangskanals 16 im Bereich der Querschnittsfläche der zweiten Ausgleichskammer 14. Unter dem Einmünden der zweiten Ausgleichskammer 14 und des Übergangskanals 16 ist dabei zu verstehen, dass diese direkt in der ersten Ausgleichskammer 11 enden. Die erste Ausgleichskammer 11 ist zusammenfassend an dem der ersten Öffnung 9 gegenüberliegenden Ende durch den oberen Begrenzungsabschnitt 31 begrenzt, der die erste Ausgleichskammer 11 nach oben hin abschließt und nur durch die einmündende zweite Ausgleichskammer 14 und den einmündenden Übergangskanal 16 durchbrochen ist, sodass die erste Ausgleichskammer 11 mit dem Inneren des Verdichtergehäuses 20 nur über die erste Öffnung 9 direkt kommuniziert.

Figur 3 zeigt eine alternative Schnittdarstellung des Saugschalldämpfers 1, in der die Ausgleichskammern 11,14 und die beiden Öffnungen 9,10 hinter der Schnittebene liegen. Zu erkennen ist das in die Dämpfungskammer 7 einmündende Ende des Übergangskanals 16 über welches Kältemittel zwischen den Ausgleichskammern 11,14 und der Dämpfungskammer 7 ausgetauscht werden kann. Auch dargestellt sind die Zwischen- bzw. Trennwände 34 die innerhalb der Dämpfungskammer 7 einzelne Dämpfungsvolumina zur Schalldämpfung begrenzen. Der Auslass 6 ist im Inneren des Saugschalldämpfers 1 als ein durch das zweite Gehäuseteil 3 ausgebildeter Auslassstutzen 35 fortgesetzt, in den ein vom dritten Gehäuseteil 4 ausgebildeter Leitungskanal 36 einmündet. Dieser Leitungskanal 36 erstreckt sich über die gesamte Höhenerstreckung des dritten Gehäuseteils 4, um den vom Kältemittel zu durchströmenden Abschnitt zwischen Einlassöffnung 8 und Auslassöffnung 28 zu maximieren und damit die Schalldämpfung zu verbessern. Zwischen dem Auslassstutzen 35 und dem oberen Endabschnitt des Leitungskanals 36 ist ein sich normal zur Höhenrichtung erstreckender Spalt ausgebildet, durch den Kältemittel vom Übergangskanal 16 bzw. vom Einlass 5 zum Auslass 6 strömen kann. Durch diesen Spalt, der sehr geringe Abmessungen aufweist und deshalb einen hohen Strömungswiderstand aufweist, strömt im Regelbetrieb nur wenig Kältemittel. Ist jedoch die Dämpfungskammer 7 mit Kältemittel gefüllt und das untere Ende des Leitungskanals 36 verschlossen, etwa weil der Kältemittelverdichter 19 über die Kältemittelzuleitung 24 und nicht über ein Prozessrohr mit flüssigem Kältemittel befüllt worden ist, kann über den Spalt gasförmiges Kältemittel sowohl vom Übergangskanal 16 als auch vom Einlass 5 zur Auslassöffnung 28 strömen.

In der Folge wird kurz die Wirkungsweise der Ausgleichskammern 11,14 beschrieben:
Im Ansaugtakt wird das in der Dämpfungskammer 7 befindliche bzw. das nachströmende Kältemittel über den Auslass 6 und das geöffnete Ansaugventil durch den Saugschalldämpfer 1 in den Zylinder der Kolben-Zylinder-Einheit 22 eingesaugt, wobei durch die Saugwirkung auch ein Teil des in den Ausgleichskammern 11,14 befindlichen Kältemittels zum Druckausgleich wieder über den Übergangskanal 16 in die Dämpfungskammer 7 gesaugt wird. Dieser Strömungsverlauf teilt sich in zwei Hauptlinien, die als strichlierte Linien dargestellt sind. Der Hauptast der Strömung, über den in der Regel der Hauptteil des Kältemittels stammt, verläuft vom Einlass 5 kommend zum Bodenbereich des Saugschalldämpfers 1 und anschließend über den Leitungskanal 36 und den Auslass 6 zur Auslassöffnung 28. Der Nebenast, über den der Druckausgleich des Saugschalldämpfers 1 erfolgt, verläuft über die entsprechenden Öffnungen 9,10 der in der vorliegenden Abbildung nicht dargestellten Ausgleichskammern 11,14 in die Ausgleichskammern 11,14 selbst, und weiter über den Übergangskanal 16 in die Dämpfungskammer 7, wo sich der Nebenast im Bodenbereich des Saugschalldämpfers 1 vor dem Eintritt in den Leitungskanal 36 mit dem Hauptast vereinigt.

Ein geringer Teil des Kältemittels strömt auch über den oben beschriebenen Spalt zwischen Auslassstutzen 35 und Leitungskanal 36 direkt vom Einlass 5 bzw. vom Übergangskanal 16 zum Auslass 6 ohne zuerst zum Bodenbereich geführt zu werden. Dieser Umgehungs-Strömungsverlauf ist als strich-zwei-punktiere Linie dargestellt. Während im Regelbetriebszustand nur eine vernachlässigbar kleine Menge an Kältemittel über die Umgehungsströmung strömt, kann durch den Spalt sichergestellt werden, dass gasförmiges Kältemittel in die Kolben-Zylinder-Einheit 22 gesaugt werden kann, selbst wenn das untere Ende des Leitungskanals 36, etwa durch flüssiges Kältemittel, verschlossen ist.

Über die Öffnungen 9,10 der Ausgleichskammern 11,14 wird im Ansaugtakt erwärmtes Kältemittel aus der Umgebung, also aus dem Inneren des Verdichtergehäuses 20 in die Ausgleichskammern 11,14 eingesaugt, sodass ein Druckausgleich zwischen dem Saugschalldämpfer 1 und der Umgebung stattfindet. Während des Verdichtungstakts strömt aus der Kältemittelzuleitung 24 gasförmiges Kältemittel in die Dämpfungskammer 7 nach und schiebt darin befindliches Kältemittel über den Übergangskanal 16 in die Ausgleichskammern 11,14 bzw. aus den Ausgleichskammern 11,14 ins Innere des Verdichtergehäuses 20. In beiden Ausgleichskammern 11,14 oszilliert bzw. pulsiert also während des Betriebs des Kältemittelverdichters 19 eine Gassäule, die sich, je nach Kurbelwinkel, zu unterschiedlichen Teilen aus Kältemittel aus der Dämpfungskammer 7 und erwärmten Kältemittel aus dem Inneren des Verdichtergehäuses 20 zusammensetzt. Während des Betriebs kommt es jedoch nur zu einer geringen Vermischung zwischen kaltem und warmem Kältemittel, die jedoch aufgrund des notwendigen Druckausgleichs in Kauf genommen werden muss. Zusätzlich wird, wie zuvor detailliert beschrieben, der Druckabfall im Saugschalldämpfer 1 durch den Druckausgleich über die Ausgleichskammern 11,14 und den daraus resultierenden Nebenast reduziert und damit der Wirkungsgrad des Kältemittelverdichters 19 verbessert.

Während des Verdichtungstakts der Kolben-Zylinder-Einheit 22 strömt vom Verdampfer kommendes Kältemittel über die Kältemittelzuleitung 24, das flexible Verbindungselement 25 und den Einlass 5 in den Saugschalldämpfer 1 (siehe Figur 1). Da das Ansaugventil in diesem Takt geschlossen ist, füllt das aufgrund der Druckdifferenz und der kinetischen Energie nachströmende Kältemittel zuerst die Dämpfungskammer 7, wobei überschüssiges Kältemittel über den Übergangskanal 16 in die erste Ausgleichskammer 11 und von dort einerseits in Richtung der ersten Öffnung 9 und andererseits, jedoch aufgrund des höheren Strömungswiderstands bedingt durch die kleinere Querschnittsfläche in geringerer Menge, in die zweite Ausgleichskammer 14 bzw. in Richtung der zweiten Öffnung 10 strömt. Ein Teil des in den Ausgleichskammern 11,14 befindlichen Kältemittels wird durch das nachströmende Kältemittel über die jeweilige Öffnung 9,10 in die Umgebung, also ins Innere des Verdichtergehäuses 20 ausgeschoben, sodass auch im Verdichtungstakt ein Druckausgleich zwischen dem Saugschalldämpfer 1 und der Umgebung stattfindet. Dies ist insbesondere notwendig, wenn flüssiges Kältemittel über die Kältemittelzuleitung 24 in den Saugschalldämpfer 1 gelangt und dort verdampft.

In alternativen Ausführungsvariante kann auch vorgesehen sein, dass die beiden Ausgleichskammern 11,14 jeweils direkt mit der Dämpfungskammer 7 verbunden sind und nicht ineinander einmünden, sodass die beiden Ausgleichskammern 11,14 in unterschiedlichen Bereichen des Saugschalldämpfers 1 ausgebildet sein können.

In Figur 4 ist eine dreidimensionale Darstellung des zuvor beschriebenen Saugschalldämpfers 1 abgebildet, der die Gestalt des Saugschalldämpfers 1 und die Anordnung der beiden Ausgleichskammern 11,14 bzw. der beiden Öffnungen 9,10 verdeutlicht. Zu erkennen ist dabei einerseits die dreiteilige Ausführung des aus drei Gehäuseteilen 2,3,4 bestehenden Saugschalldämpfers 1 und andererseits die Anordnung der, von der Umwandung verdeckten, Ausgleichskammern 11,14 im dem Einlass 5 diagonal gegenüberliegenden Eckbereich des Saugschalldämpfers 1.

Eine zweite Ausführungsvariante der Erfindung ist in Figur 5 als dreidimensionale Ansicht abgebildet. Der Grundaufbau des Saugschalldämpfers 1 gleicht im Wesentlichen der ersten Ausführungsvariante, insbesondere was die Funktion der Ausgleichskammern 11,14 und die Gestaltung der Dämpfungskammer 7 angeht bzw. was die Anordnung von Einlass 5 und Auslass 6 angeht. Daher wird in der Folge lediglich auf die Unterschiede zwischen den beiden Ausführungsvarianten eingegangen. Ein Unterschied äußert sich darin, dass der Saugschalldämpfer 1 nur aus zwei Gehäuseteilen 2,3 besteht, wobei das erste Gehäuseteil 2 den Unterteil des Saugschalldämpfers 1 sowie einen überwiegenden Großteil der Mantelfläche des Saugschalldämpfers 1 ausbildet und der zweite Gehäuseteil 3 das Oberteil des Saugschalldämpfers 1 samt Einlass 5 und Auslass 6.

Figur 6 zeigt eine Schnittansicht der zweiten Ausführungsvariante des Saugschalldämpfers 1 ähnlich zu Figur 2, jedoch als nicht abgesetzter Schnitt, weswegen beispielsweise der Leitungskanal 36 nicht zu erkennen ist. Die erste Öffnung 9 der ersten Ausgleichskammer 11 ist dem Bodenbereich 21 des Verdichtergehäuses 20 (vergleiche Fig. 2) zugewandt und wird vom unteren Ende der ersten Ausgleichskammer 11 ausgebildet. Die erste Ausgleichskammer 11 ist, im Unterschied zur ersten Ausführungsvariante, vollständig vom ersten Gehäuseteil 2 ausgebildet, wobei die erste Öffnung 9 als unteres, offenes Ende der ersten Ausgleichskammer 11 ausgebildet ist. In anderen Worten entspricht die Querschnittsfläche der ersten Öffnung 9 im Wesentlichen der mittleren Querschnittsfläche der ersten Ausgleichskammer 11. Die erste Ausgleichskammer 11 ist dabei rohrförmig, also als Hohlkörper, und entlang einer ersten Längsachse 17 verlaufend ausgebildet. Die erste Längsachse 17 verläuft entlang einer Geraden und ist parallel zur Höhenrichtung des Saugschalldämpfers 1 bzw. des Kältemittelverdichters 19 ausgerichtet. Der Querschnitt der ersten Ausgleichskammer 11 normal zur ersten Längsachse 17 ist als abgerundetes Rechteck ausgebildet, wobei der Querschnitt sich über die Erstreckung entlang der ersten Längsachse 17 nur geringfügig verändert und als annähern konstant anzusehen ist, sodass der Querschnitt der ersten Öffnung 9 im Wesentlichen dem Querschnitt der ersten Ausgleichskammer 11 entspricht. In anderen Worten weist die erste Ausgleichskammer 11 keinen unteren Begrenzungsabschnitt 37 (siehe Fig. 2) auf. Der parallel zur ersten Längsachse 17 der ersten Ausgleichskammer 11 verlaufende und im Bereich des oberen Begrenzungsabschnitts 31 in die erste Ausgleichskammer 11 einmündende Übergangskanal 16 ist in der vorliegenden Ausführungsvariante vom ersten Gehäuseteil 2 ausgebildet und verbindet, analog zur ersten Ausführungsvariante, die erste Ausgleichskammer 11 mit der Dämpfungskammer 7.

Die zweite Ausgleichskammer 14 erstreckt sich, wie auch im ersten Ausführungsbeispiel, über zwei Gehäuseteile 2,3, nämlich über das erste 2 und das zweite Gehäuseteil 3, und verläuft entlang der zweiten Längsachse 18. Der Abstand zwischen den Längsachsen 17,18 ist dabei so gewählt, dass der Querschnitt der zweiten Öffnung 10 den Querschnitt der ersten Öffnung 9 zu etwa 50% überlappt, wenn man die Ausgleichskammern 11,14 von unten in Richtung der Längsachsen 17,18 betrachtet. Die Gestaltung des vom ersten Gehäuseteil 2 ausgebildeten oberen Begrenzungsabschnitts 31, sowie auch des die erste Ausgleichskammer 11 mit der Dämpfungskammer 7 verbindenden Übergangskanals 16 entspricht der in der ersten Ausführungsvariante beschriebenen Gestaltung.

### BEZUGSZEICHENLISTE

- 1: Saugschalldämpfer
- 2: erstes Gehäuseteil
- 3: zweites Gehäuseteil
- 4: drittes Gehäuseteil
- 5: Einlass
- 6: Auslass
- 7: Dämpfungskammer
- 8: Einlassöffnung
- 9: erste Öffnung
- 10: zweite Öffnung
- 11: erste Ausgleichskammer
- 12: erster Teilabschnitt der ersten Ausgleichskammer
- 13: zweiter Teilabschnitt der ersten Ausgleichskammer
- 14: zweite Ausgleichskammer
- 15: rohrförmiger Fortsatz
- 16: Übergangskanal
- 17: erste Längsachse
- 18: zweite Längsachse
- 19: Kältemittelverdichter
- 20: Verdichtergehäuse
- 21: Bodenbereich
- 22: Kolben-Zylinder-Einheit
- 23: Zylinderkopf
- 24: Kältemittelzuleitung
- 25: Verbindungselement
- 26: Ölsumpf
- 27: Pegels des Ölsumpfs 26
- 28: Auslassöffnung
- 29: Ölablassöffnung
- 30: Befestigungsabschnitt
- 31: oberer Begrenzungsabschnitt
- 32: Zylinderkopfdeckel
- 33: Druckstrecke
- 34: Zwischen- oder Trennwand
- 35: Auslassstutzen
- 36: Leitungskanal
- 37: unterer Begrenzungsabschnitt

## Patentansprüche

1. Saugschalldämpfer (1) für einen gekapselten Kältemittelverdichter (19), mit
- einem Einlass (5), um Kältemittel in den Saugschalldämpfer (1) einströmen lassen zu können,
- einem Auslass (6), um Kältemittel aus dem Saugschalldämpfer (1) in Richtung einer Kolben-Zylinder-Einheit (22) des Kältemittelverdichters (19) ausströmen lassen zu können,
- einer den Einlass (5) und den Auslass (6) miteinander verbindenden Dämpfungskammer (7) zur Schalldämpfung und
- einer mit der Dämpfungskammer (7) in Verbindung stehenden und mit der Umgebung kommunizierenden Ausgleichskammer zum Druckausgleich der Dämpfungskammer (7) mit der Umgebung, wobei der Saugschalldämpfer (1) in einer Betriebsposition zur Aufnahme in einem, einen wannenartig ausgebildeten Bodenbereich (21) zur Aufnahme eines Ölsumpfs (26) aufweisenden, Verdichtergehäuse (20) des Kältemittelverdichters (19) vorgesehen ist,
**dadurch gekennzeichnet, dass**
die Ausgleichskammer als erste Ausgleichskammer (11) mit einer ersten Öffnung (9) zum Druckausgleich ausgebildet ist und der Saugschalldämpfer (1) eine weitere, zweite Ausgleichskammer (14) mit einer zweiten Öffnung (10) zum Druckausgleich aufweist.

2. Saugschalldämpfer (1) nach Anspruch 1, **dadurch gekennzeichnet, dass** der Saugschalldämpfer (1) zumindest einen Befestigungsabschnitt (30) zur Anbindung an die Kolben-Zylinder-Einheit (22) aufweist und dass der zumindest eine Befestigungsabschnitt (30) derart ausgebildet ist, um eine Befestigung des Saugschalldämpfers (1) an der Kolben-Zylinder-Einheit (22) zu ermöglichen, in welcher die zweite Öffnung (10) bezogen auf den Bodenbereich (21) des Verdichtergehäuses (20) oberhalb der ersten Öffnung (9) angeordnet ist.

3. Saugschalldämpfer (1) nach Anspruch 1 oder 2, **dadurch gekennzeichnet, dass** ein flexibles Verbindungselement (25) zur Verbindung einer am Einlass (5) angeordneten Einlassöffnung (8) des Saugschalldämpfers (1) mit einer in der Betriebsposition in das Verdichtergehäuse (20) einmündenden Kältemittelzuleitung (24) am Einlass (5) befestigt ist, um Kältemittel aus der Kältemittelzuleitung (24) direkt in den Saugschalldämpfer (1) strömen zu lassen.

4. Saugschalldämpfer (1) nach Anspruch 1 oder 3, **dadurch gekennzeichnet, dass** der Saugschalldämpfer (1) zumindest ein erstes Gehäuseteil (2) und ein zweites Gehäuseteil (3) umfasst, wobei der Einlass (5) und/oder der Auslass (6) vom zweiten Gehäuseteil (3) ausgebildet sind.

5. Saugschalldämpfer (1) nach Anspruch 4, **dadurch gekennzeichnet, dass** die erste Ausgleichskammer (11) mit der ersten Öffnung (9) im ersten Gehäuseteil (2) ausgebildet ist.

6. Saugschalldämpfer (1) nach einem der Ansprüche 1 bis 4, **dadurch gekennzeichnet, dass** der Saugschalldämpfer (1) zumindest ein erstes Gehäuseteil (2), ein zweites Gehäuseteil (3) und ein drittes Gehäuseteil (4) umfasst, wobei das dritte Gehäuseteil (4) zwischen dem ersten Gehäuseteil (2) und dem zweiten Gehäuseteil (3) angeordnet ist.

7. Saugschalldämpfer (1) nach Anspruch 6, **dadurch gekennzeichnet, dass** die erste Ausgleichskammer (11) einen vom ersten Gehäuseteil (2) begrenzten ersten Teilabschnitt (12) und einen vom dritten Gehäuseteil (4) begrenzten zweiten Teilabschnitt (13) aufweist, wobei die erste Öffnung (9) im ersten Teilabschnitt (12) ausgebildet ist.

8. Saugschalldämpfer (1) nach Anspruch 7, **dadurch gekennzeichnet, dass** der erste Teilabschnitt (12) als ein gegenüber dem zweiten Teilabschnitt (13) verengter, rohrförmiger Fortsatz (15) des ersten Gehäuseteils (2) ausgebildet ist.

9. Saugschalldämpfer (1) nach einem der Ansprüche 4 bis 8, **dadurch gekennzeichnet, dass** die zweite Ausgleichskammer (14) zumindest abschnittsweise im zweiten Gehäuseteil (3) ausgebildet ist, wobei die zweite Öffnung (10) im zweiten Gehäuseteil (3) ausgebildet ist.

10. Saugschalldämpfer (1) nach einem der Ansprüche 1 bis 9, **dadurch gekennzeichnet, dass** die zweite Ausgleichskammer (14) in die erste Ausgleichskammer (11) einmündet.

11. Saugschalldämpfer (1) nach einem der Ansprüche 1 bis 10, **dadurch gekennzeichnet, dass** die erste Ausgleichskammer (11) eine erste Längsachse (17) aufweist und rohrförmig ausgebildet ist
und/oder dass die zweite Ausgleichskammer (14) eine zweite Längsachse (18) aufweist und rohrförmig, vorzugsweise mit einem kreisrunden Querschnitt, ausgebildet ist,
wobei die erste Längsachse (17) und die zweite Längsachse (18) vorzugsweise parallel zueinander verlaufend, insbesondere fluchtend, angeordnet sind.

12. Saugschalldämpfer (1) nach Anspruch 11, **dadurch gekennzeichnet, dass** der Querschnitt der zweiten Öffnung (10) in Richtung der ersten Längsachse (17) gesehen, vorzugsweise in Richtung der ersten (17) und zweiten Längsachse (18) gesehen, den Querschnitt der ersten Öffnung (9) überlappt.

13. Saugschalldämpfer (1) nach einem der Ansprüche 1 bis 12, **dadurch gekennzeichnet, dass** ein Übergangskanal (16) die Dämpfungskammer (7) mit der ersten Ausgleichskammer (11) verbindet, um den Austausch von Kältemittel zu ermöglichen, wobei der Übergangskanal (16) im der ersten Öffnung (9) gegenüberliegenden Endbereich der ersten Ausgleichskammer (11) angeordnet ist
und/oder dass ein Übergangskanal (16) die Dämpfungskammer (7) mit der zweiten Ausgleichskammer (14) verbindet, um den Austausch von Kältemittel zu ermöglichen.

14. Saugschalldämpfer (1) nach Anspruch 13, **dadurch gekennzeichnet, dass** der Übergangskanal (16) parallel zur ersten Längsachse (17) verlaufend angeordnet ist und im ersten (2) oder im dritten Gehäuseteil (4) ausgebildet ist.

15. Gekapselter Kältemittelverdichter (19), welcher ein, vorzugsweise hermetisch dichtes, Verdichtergehäuse (20) mit einer in das Verdichtergehäuse (20) einmündenden Kältemittelzuleitung (24) aufweist, wobei Kältemittel über die Kältemittelzuleitung (24) zuführbar ist,
wobei im Inneren des Verdichtergehäuses (20) eine das Kältemittel zyklisch verdichtende Kolben-Zylinder-Einheit (22) arbeitet mit einem, eine in einer Ventilplatte der Kolben-Zylinder-Einheit (22) angeordnete Ansaugöffnung umfassenden, Ansaugventil,
wobei das Verdichtergehäuse (20) einen wannenartig ausgebildeten Bodenbereich (21) zur Aufnahme eines Ölsumpfs (26) zur Schmierung der Kolben-Zylinder-Einheit (22) aufweist,
wobei ein das Kältemittel von der Kältemittelzuleitung (24) zum Ansaugventil leitender Saugschalldämpfer (1) nach einem der Ansprüche 1 bis 14 in der Betriebsposition derart im Verdichtergehäuse (20) angeordnet ist, dass die zweite Öffnung (10) bezogen auf den Bodenbereich (21) des Verdichtergehäuses (20) oberhalb der ersten Öffnung (9) angeordnet ist.

16. Kältemittelverdichter (19) nach Anspruch 15, **dadurch gekennzeichnet, dass** der Saugschalldämpfer (1) derart im Verdichtergehäuse (20) angeordnet ist, dass zumindest die zweite Öffnung (10) der zweiten Ausgleichskammer (14), vorzugsweise die erste Öffnung (9) und die zweite Öffnung (10), oberhalb eines sich, vorzugsweise in einer Ruhephase des Kältemittelverdichters (19), ausbildenden Pegels (27) des Ölsumpfs (26) angeordnet ist.

17. Kältemittelverdichter (19) nach einem der Ansprüche 15 bis 16, **dadurch gekennzeichnet, dass** der Befestigungsabschnitt (30) des Saugschalldämpfers (1) an einem Zylinderkopf (23) der Kolben-Zylinder-Einheit (22) befestigt ist.

18. Kältemittelverdichter (19) nach einem der Ansprüche 15 bis 17, **dadurch gekennzeichnet, dass** ein flexibles Verbindungselement (25) die Kältemittelzuleitung (24) und die vom Einlass (5) ausgebildete Einlassöffnung (8) des Saugschalldämpfers (1) miteinander verbindet, um Kältemittel aus der Kältemittelzuleitung (24) über den Saugschalldämpfer (1) direkt zum Ansaugventil strömen zu lassen.

19. Kältemittelverdichter (19) nach einem der Ansprüche 15 bis 18, **dadurch gekennzeichnet, dass** die erste Öffnung (9) dem Bodenbereich (21) zugewandt ist und die zweite Öffnung (10) dem Bodenbereich (21) abgewandt ist.

## Claims

1. Suction silencer (1) for an encapsulated refrigerant compressor (19), with
- an inlet (5) to allow refrigerant to flow into the suction silencer (1),
- an outlet (6) to allow refrigerant to escape from the suction silencer (1) toward a piston-cylinder unit (22) of the refrigerant compressor (19),
- a damping chamber (7) connecting the inlet (5) and the outlet (6) for sound damping, and
- an equalization chamber communicating with the damping chamber (7) and communicating with the environment for equalizing the pressure of the damping chamber (7) with the environment,
wherein the suction silencer (1) is provided in an operating position for integration in a compressor housing (20) of the refrigerant compressor (19), which compressor housing (20) has a trough-like base region (21) for integration of an oil sump (26),
**characterized in that**
the equalization chamber is formed as a first equalization chamber (11) with a first opening (9) for pressure equalization, and the suction silencer (1) has a further, second equalization chamber (14) with a second opening (10) for pressure equalization.

2. Suction silencer (1) in accordance with Claim 1, **characterized by the fact that** the suction silencer (1) has at least one fastening section (30) for connection to the piston-cylinder unit (22) and that the at least one fastening section (30) is designed in such a way as to enable a fastening of the suction silencer (1) to the piston-cylinder unit (22), in which the second opening (10) is arranged above the first opening (9) with respect to the bottom area (21) of the compressor housing (20).

3. Suction silencer (1) according to Claim 1 or 2, **characterized by the fact that** a flexible connecting element (25) for connecting an inlet opening (8) of the suction silencer (1) arranged at the inlet (5) with a refrigerant supply line (24) opening into the compressor housing (20) in the operating position is fastened at the inlet (5) in order to allow refrigerant to flow directly from the refrigerant supply line (24) into the suction silencer (1).

4. Suction silencer (1) in accordance with Claim 1 or 3, **characterized by the fact that** the suction silencer (1) comprises at least a first housing part (2) and a second housing part (3), the inlet (5) and/or the outlet (6) being formed by the second housing part (3).

5. Suction silencer (1) in accordance with Claim 4, **characterized by the fact that** the first equalization chamber (11) having the first opening (9) is formed in the first housing part (2).

6. Suction silencer (1) in accordance with one of Claims 1 to 4, **characterized by the fact that** the suction silencer (1) comprises at least a first hosing part (2), a second housing part (3) and a third housing part (4), whereas the third housing part (4) is arranged between the first housing part (2) and the second housing part (3).

7. Suction silencer (1) according to Claim 6, **characterized by the fact that** the first equalization chamber (11) has a first section (12) bounded by the first housing part (2) and a second section (13) bounded by the third housing part (4), the first opening (9) being formed in the first section (12) .

8. Suction silencer (1) according to Claim 7, **characterized by the fact that** the first section (12), which is narrower than the second section (13), is formed as a tubular extension (15) of the first housing part (2).

9. Suction silencer (1) according to one of Claims 4 to 8, **characterized by the fact that** the second equalization chamber (14) is formed at least in sections in the second housing part (3), the second opening (10) being formed in the second housing part (3).

10. Suction silencer (1) according to one of Claims 1 to 9, **characterized by the fact that** the second equalization chamber (14) opens into the first equalization chamber (11).

11. Suction silencer (1) according to one of Claims 1 to 10, **characterized by the fact that** the first equalization chamber (11) has a first longitudinal axis (17) and is of tubular design
and/or that the second equalization chamber (14) has a second longitudinal axis (18) and is of tubular design, preferably with a circular cross section,
wherein the first longitudinal axis (17) and the second longitudinal axis (18) are preferably arranged in parallel to one another, especially in alignment.

12. Suction silencer (1) according to Claim 11, **characterized by the fact that** the cross section of the second opening (10), seen in the direction of the first longitudinal axis (17), preferably seen in the direction of the first longitudinal axis (17) and second longitudinal axis (18), overlaps the cross section of the first opening (9).

13. Suction silencer (1) according to one of Claims 1 to 12, **characterized by the fact that** a transition channel (16) connects the damping chamber (7) to the first equalization chamber (11) to allow the exchange of refrigerant, the transition channel (16) being located in the end region of the first equalization chamber (11) opposite the first opening (9) and/or in that a transition channel (16) connects the damping chamber (7) to the second equalization chamber (14) in order to permit the exchange of refrigerant.

14. Suction silencer (1) according to Claim 13, **characterized by the fact that** the transition channel (16) is arranged in parallel to the first longitudinal axis (17) and is formed in the first (2) or third housing part (4).

15. Encapsulated refrigerant compressor (19) that has a compressor housing (20), preferably hermetically sealed, with a refrigerant supply line (24) opening into the compressor housing (20), wherein refrigerant can be supplied via the refrigerant supply line (24), wherein inside the compressor housing (20), a piston-cylinder unit (22) cyclically compressing the refrigerant operates with a suction valve comprising a suction opening arranged in a valve plate of the piston-cylinder unit (22),
wherein the compressor housing (20) has a trough-shaped base region (21) for receiving an oil sump (26) for lubricating the piston-cylinder unit (22), a suction silencer (1) according to one of Claims 1 to 14 that conducts the refrigerant from the refrigerant supply line (24) to the intake valve is arranged in the compressor housing (20) in the operating position in such a way that the second opening (10) is arranged above the first opening (9) in relation to the bottom region (21) of the compressor housing (20).

16. Refrigerant compressor (19) according to Claim 15, **characterized by the fact that** the suction silencer (1) is arranged in the compressor housing (20) in such a way that at least the second opening (10) of the second equalization chamber (14), preferably the first opening (9) and the second opening (10), is arranged above a level (27) of the oil sump (26), which is forming preferably during a resting phase of the refrigerant compressor (19).

17. Refrigerant compressor (19) according to one of Claims 15 to 16, **characterized by the fact that** the fastening section (30) of the suction silencer (1) is fixed to a cylinder head (23) of the piston-cylinder unit (22).

18. Refrigerant compressor (19) according to one of Claims 15 to 17, **characterized by the fact that** a flexible connecting element (25) connects the refrigerant supply line (24) and the inlet opening (8) of the suction silencer (1) formed by the inlet (5) to each other in order to allow refrigerant to flow from the refrigerant supply line (24) via the suction silencer (1) directly to the intake valve.

19. Refrigerant compressor (19) according to one of Claims 15 to 18, **characterized by the fact that** the first opening (9) faces the bottom area (21) and the second opening (10) faces away from the bottom area (21).

## Revendications

1. Silencieux d'aspiration (1) pour un compresseur à réfrigérant (19) encapsulé, avec
- une entrée (5) pour faire entrer du réfrigérant dans le silencieux d'aspiration (1),
- une sortie (6) pour faire sortir du réfrigérant du silencieux d'aspiration (1) en direction d'une unité de piston et cylindre (22) du compresseur à réfrigérant (19),
- une chambre d'atténuation (7) reliant l'entrée (5) et la sortie (6) pour l'atténuation du bruit et
- une chambre d'équilibrage reliée à la chambre d'atténuation (7) et communiquant avec l'environnement pour l'équilibrage de la pression de la chambre d'atténuation (7) avec l'environnement,
le silencieux d'aspiration (1) étant conçu pour être logé, dans une position de fonctionnement, dans un carter de compresseur (20) du compresseur à réfrigérant (19) présentant une partie de fond (21) en forme de cuvette pour recevoir un bac à huile (26), **caractérisé en ce que** la chambre d'équilibrage est conformée comme une première chambre d'équilibrage (11) avec une première ouverture (9) pour l'équilibrage de la pression et le silencieux d'aspiration (1) présente une deuxième chambre d'équilibrage (14) avec une deuxième ouverture (10) pour l'équilibrage de la pression.

2. Silencieux d'aspiration (1) selon la revendication 1, **caractérisé en ce que** le silencieux d'aspiration (1) comporte au moins une section de fixation (30) destinée à s'attacher à l'unité de piston et cylindre (22) et **en ce que** l'au moins une section de fixation (30) est conformée pour permettre une fixation du silencieux d'aspiration (1) sur l'unité de piston et cylindre (22) dans laquelle la deuxième ouverture (10) est disposée au-dessus de la première ouverture (9) par rapport à la partie de fond (21) du carter de compresseur (20).

3. Silencieux d'aspiration (1) selon la revendication 1 ou 2, **caractérisé en ce qu'**un élément de liaison flexible (25) pour la fixation d'une ouverture d'entrée (8) du silencieux d'aspiration (1) disposée à l'entrée (5) à une conduite d'arrivée de réfrigérant (24) débouchant dans le carter de compresseur (20) dans la position de fonctionnement est fixé à l'entrée (5) pour faire passer directement du réfrigérant de la conduite d'arrivée de réfrigérant (24) dans le silencieux d'aspiration (1).

4. Silencieux d'aspiration (1) selon la revendication 1 ou 3, **caractérisé en ce que** le silencieux d'aspiration (1) comprend au moins une première partie de carter (2) et une deuxième partie de carter (3), l'entrée (5) et/ou la sortie (6) étant formées par la deuxième partie de carter (3).

5. Silencieux d'aspiration (1) selon la revendication 4, **caractérisé en ce que** la première chambre d'équilibrage (11) est formée avec la première ouverture (9) dans la première partie de carter (2).

6. Silencieux d'aspiration (1) selon l'une des revendications 1 à 4, **caractérisé en ce que** le silencieux d'aspiration (1) comprend au moins une première partie de carter (2), une deuxième partie de carter (3) et une troisième partie de carter (4), la troisième partie de carter (4) étant disposée entre la première partie de carter (2) et la deuxième partie de carter (3).

7. Silencieux d'aspiration (1) selon la revendication 6, **caractérisé en ce que** la première chambre d'équilibrage (11) comporte une première section partielle (12) délimitée par la première partie de carter (2) et une deuxième section partielle (13) délimitée par la troisième partie de carter (4), la première ouverture (9) étant formée dans la première section partielle (12).

8. Silencieux d'aspiration (1) selon la revendication 7, **caractérisé en ce que** la première section partielle (12) est conformée comme une saillie tubulaire (15) de la première partie de carter (2) qui est rétrécie par rapport à la deuxième section partielle (13).

9. Silencieux d'aspiration (1) selon l'une des revendications 4 à 8, **caractérisé en ce que** la deuxième chambre d'équilibrage (14) est formée au moins en partie dans la deuxième partie de carter (3), la deuxième ouverture (10) étant formée dans la deuxième partie de carter (3).

10. Silencieux d'aspiration (1) selon l'une des revendications 1 à 9, **caractérisé en ce que** la deuxième chambre d'équilibrage (14) débouche dans la première chambre d'équilibrage (11).

11. Silencieux d'aspiration (1) selon l'une des revendications 1 à 10, **caractérisé en ce que** la première chambre d'équilibrage (11) présente un premier axe longitudinal (17) et est de forme tubulaire
et/ou **en ce que** la deuxième chambre d'équilibrage (14) présente un deuxième axe longitudinal (18) et est de forme tubulaire, de préférence avec une section circulaire,
le premier axe longitudinal (17) et le deuxième axe longitudinal (18) étant de préférence parallèles l'un à l'autre, en particulier alignés.

12. Silencieux d'aspiration (1) selon la revendication 11, **caractérisé en ce que** la section de la deuxième ouverture (10), vue en direction du premier axe longitudinal (17), de préférence en direction du premier axe longitudinal (17) et du deuxième (18), chevauche la section de la première ouverture (9).

13. Silencieux d'aspiration (1) selon l'une des revendications 1 à 12, **caractérisé en ce qu'**un canal de transition (16) relie la chambre d'atténuation (7) à la première chambre d'équilibrage (11) pour permettre l'échange de réfrigérant, le canal de transition (16) étant disposé dans la zone d'extrémité de la première chambre d'équilibrage (11) qui fait face à la première ouverture (9),
et/ou **en ce qu'**un canal de transition (16) relie la chambre d'atténuation (7) à la deuxième chambre d'équilibrage (14) pour permettre l'échange de réfrigérant.

14. Silencieux d'aspiration (1) selon la revendication 13, **caractérisé en ce que** le canal de transition (16) est disposé parallèlement au premier axe longitudinal (17) et formé dans la première partie de carter (2) ou la troisième (4).

15. Compresseur à réfrigérant encapsulé (19) présentant un carter de compresseur (20) de préférence hermétique, avec une conduite d'arrivée de réfrigérant (24) débouchant dans le carter de compresseur (20), dans lequel du réfrigérant peut être amené par la conduite d'arrivée de réfrigérant (24),
dans lequel une unité de piston et cylindre (22) comprimant de façon cyclique le réfrigérant fonctionne à l'intérieur du carter de compresseur (20), avec une soupape d'aspiration comprenant une ouverture d'aspiration disposée dans une plaque de soupape de l'unité de piston et cylindre (22), dans lequel le carter de compresseur (20) présente une partie de fond (21) en forme de cuvette pour recevoir un bac à huile (26) pour la lubrification de l'unité de piston et cylindre (22),
dans lequel un silencieux d'aspiration (1) selon l'une des revendications 1 à 14 amenant le réfrigérant de la conduite d'arrivée de réfrigérant (24) à la soupape d'aspiration est disposé dans le carter de compresseur (20) dans la position de fonctionnement de telle manière que la deuxième ouverture (10) soit disposée au-dessus de la première ouverture (9) par rapport à la partie de fond (21) du carter de compresseur (20).

16. Compresseur à réfrigérant (19) selon la revendication 15, **caractérisé en ce que** le silencieux d'aspiration (1) est disposé dans le carter de compresseur (20) de telle manière que la deuxième ouverture (10) de la deuxième chambre d'équilibrage (14) au minimum, de préférence la première ouverture (9) et la deuxième ouverture (10), soit disposée au-dessus d'un niveau (27) du bac à huile (26) qui s'établit, de préférence, pendant une phase de repos du compresseur à réfrigérant (19).

17. Compresseur à réfrigérant (19) selon l'une des revendications 15 à 16, **caractérisé en ce que** la section de fixation (30) du silencieux d'aspiration (1) est fixée sur une culasse (23) de l'unité de piston et cylindre (22).

18. Compresseur à réfrigérant (19) selon l'une des revendications 15 à 17, **caractérisé en ce qu'**un élément de liaison flexible (25) relie la conduite d'arrivée de réfrigérant (24) et l'ouverture d'entrée (8) du silencieux d'aspiration (1) formée par l'entrée (5) pour laisser directement passer du réfrigérant de la conduite d'arrivée de réfrigérant (24) vers la soupape d'aspiration en passant par le silencieux d'aspiration (1).

19. Compresseur à réfrigérant (19) selon l'une des revendications 15 à 18, **caractérisé en ce que** la première ouverture (9) est tournée vers la partie de fond (21) et la deuxième ouverture (10) est tournée à l'opposé de la partie de fond (21).
